# EUROPÄISCHE PATENTSCHRIFT

(11) **EP 3 175 436 B1**
(45) Veröffentlichungstag und Bekanntmachung des Hinweises auf die Patenterteilung: **20.11.2019**
(21) Anmeldenummer: 15744172.6
(22) Anmeldetag: 27.07.2015
(51) Int. Cl.: G09B 9/02, G09B 9/12, A63G 31/16

(54) **VORRICHTUNG ZUR RÄUMLICHEN BEWEGUNG ZUMINDEST EINER PERSON**
APPARATUS FOR SPATIAL MOVEMENT OF AT LEAST ONE PERSON
APPAREIL POUR LE MOUVEMENT SPATIAL D'AU MOINS UNE PERSONNE

(30) Priorität: 29.07.2014 AT 6002014
(43) Veröffentlichungstag der Anmeldung: 07.06.2017
(73) Patentinhaber: AMST-Systemtechnik GmbH, 5282 Ranshofen (AT)
(72) Erfinder: SCHLÜSSELBERGER, Rainer, A-5282 Ranshofen (AT); SCHLÜSSELBERGER JUN., Richard, A-5280 Braunau am Inn (AT); MAYRHOFER, Michael, A-5282 Ranshofen (AT)
(74) Vertreter: Puchberger & Partner Patentanwälte
(86) Internationale Anmeldenummer: PCT/EP2015/067128
(87) Internationale Veröffentlichungsnummer: WO 2016/016177

(56) Entgegenhaltungen:
- WO-A1-2012/160022
- AT-A1- 507 373
- Scott T Glaser ET AL: "G-Pointing: Articulated Centrifuge for Real-Time G Flight Simulation", , 11. August 2011 (2011-08-11), Seiten 1-8, XP055214143, Gefunden im Internet: URL:http://www.simairnix.com/images/Resear ch-Papers/G-Pointing-Paper.pdf [gefunden am 2015-09-17]
- Anonymous: "The GL-6000 GRYPHON (TM)", Falcon TM AIRCREW TRAINING The Future of Human Factors Training & Research, 30. September 2012 (2012-09-30), Seiten 1-2, XP055214490, Gefunden im Internet: URL:http://etctacticalflight.com/wp-conten t/media/product/pdf/ETC-GL6000-Brochure.pd f [gefunden am 2015-09-18]
- JIA PUZHAO: "Passage; Steady-State Acceleration Simulation Test Equipment - Centrifuge Conspectus and Design", 30 November 2013 (2013-11-30), STEADY-STATE ACCELERATION SIMULATION TEST EQUIPMENT - CENTRIFUGE CONSPECTUS AND DESIGN, NATIONAL DEFENSE INDUSTRY PRESS, CN, PAGE(S) 321 - 322, 329, XP009509489, ISBN: 978-7-118-09112-0 * pages 321-322 *

## Beschreibung

Die Erfindung betrifft eine Vorrichtung zur räumlichen Bewegung von zumindest einer Person und insbesondere zur Simulation von Beschleunigungszuständen oder Beschleunigungsabfolgen.

Gegebenenfalls ist die Vorrichtung ein System, das mehrere Komponenten umfasst, die dazu eingerichtet sind, eine räumliche Bewegung einer Person zu ermöglichen. Gemäß einer bevorzugten Ausführungsform ist die erfindungsgemäße Vorrichtung bzw. das System als Flugsimulator, Bewegungssimulator oder Orientierungssimulator ausgebildet.

Herkömmliche symmetrische Zweiarm-Zentrifugen sind unter anderem aus den nachfolgenden Publikationen bekannt: WO 2012/160022 A1, AT 507 373 A1, http://www.simairnix.com/images/Research-Papers/G-Pointing-Paper.pdf und http://etcacticalflight.com/wp-content/media/product/pdf/ETC-GL6000-Brochure.pdf.

Aus der angeführten WO 2012/160022 A1 ist eine symmetrisch ausgestaltete Zweiarm-Zentrifuge bekannt, wobei bei dieser Zweiarm-Zentrifuge die Normalabstände der beiden Maximalstellungen gleich weit entfernt sind bzw. nicht definiert sind.

Aus der angeführten AT 507 373 A1 ist ebenfalls eine Zweiarm-Zentrifuge bekannt, wobei bei dieser Zweiarm-Zentrifuge die Maximalstellungen symmetrisch angeordnet sind.

Die erfindungsgemäße Vorrichtung dient bevorzugt der Simulation von bewegten Objekten, wie beispielsweise Flugzeugen, Helikoptern, Fahrzeugen, Schiffen oder ähnlichen Objekten. Dabei wird einer Person, die sich in einer Kabine oder einem Hohlkörper befindet, über eine Vielzahl an künstlich erzeugten Sinneswahrnehmungen eine virtuelle Realität vorgespielt. Diese Sinnesreize sind einerseits beispielsweise audiovisuelle Reize, die über Bildwiedergabesysteme und Tonwiedergabesysteme dem Benutzer zugeführt werden. Andererseits werden über die erfindungsgemäße Vorrichtung bevorzugt Beschleunigungen, Momente und/oder Kräfte erzeugt, die auf den Benutzer wirken. Durch die Kombination aus audiovisuellen, visuellen, kinematischen, kinetischen und/oder physikalischen Sinneseindrücken interpretiert das menschliche Gehirn virtuelle Bewegungs- und Beschleunigungszustände. Diese Interpretation wirkt für den Benutzer umso realistischer, je exakter die Sinneswahrnehmungen den realen Sinneswahrnehmungen solcher Situationen gleichen. Aus diesem Grund ist es vorteilhaft, diese Signale so wahrnehmungsgetreu wie möglich dem Benutzer zuzuführen. Ferner umfasst die Vorrichtung bevorzugt die Möglichkeit der Einflussnahme auf die Simulation durch die Person. Durch diese Einflussnahme kann die Person beispielsweise die Bewegung des simulierten Objektes in der virtuellen, simulierten Welt aber auch die Bewegung der Vorrichtung steuern.

Die Steuersignale der Person und etwaige Umwelteinflüsse wie beispielsweise Wind, Fahrbahnunebenheiten etc. werden bevorzugt einem physikalischen Simulationsmodell zugeführt, das einer mathematischen Abbildung des realen Verhaltens des simulierten Objekts entspricht oder zumindest ähnelt. Es beinhaltet Größen wie beispielsweise Massenträgheiten, Widerstände, etc. Mit Hilfe dieses Modells werden insbesondere die Beschleunigungen, Momente und/oder Kräfte und deren Richtungen berechnet, die dem Benutzer in der virtuellen Welt zugeführt werden sollen. Dies geschieht über die Steuerung unterschiedlicher Antriebe durch eine Steuerungseinheit oder eine Steuerungseinrichtung.

Um Beschleunigungszustände und insbesondere Beschleunigungsänderungen so wahrnehmungsgetreu wie möglich simulieren zu können, ist es vorteilhaft, dass sowohl die Amplitude als auch die Frequenz bzw. der Verlauf eines Beschleunigungsablaufes so exakt oder wahrnehmungsgetreu wie möglich nachgebildet und damit simuliert werden können. Bei Flugsimulatoren beispielsweise müssen zur realitätsnahen Simulation einer stabilen Fluglage relativ kleine Beschleunigungsänderungen zeitmäßig exakt simuliert werden. Für die Simulation von stark dynamischen Manövern mit hohen Beschleunigungen, wie beispielsweise extreme Richtungsänderungen, müssen hingegen hohe Beschleunigungen und rasche Beschleunigungsänderungen simuliert werden.
Beispielsweise sollen erfindungsgemäß Beschleunigungen von mehr als oder bis zu 2, 3, 4, 5, 6, 7, 8 oder 9 G dargestellt werden können. Um schnelle Manöver wahrnehmungsgetreu simulieren zu können, sollte der mögliche zeitliche Gradient der Beschleunigung beispielsweise mehr als oder bis zu 1 G/s, 2 G/s, 3 G/s betragen. Die Einheit G entspricht definitionsgemäß der Erdbeschleunigung bzw. einem Vielfachen der Erdbeschleunigung. Ferner sollen Änderungen der Beschleunigungsrichtung, beispielsweise Orientierungsänderungen der Beschleunigung um 180°mit einer Frequenz von über 2Hz dargestellt werden können.

Zur Simulation derart unterschiedlicher Bewegungs- und Beschleunigungszustände sind gemäß Stand der Technik Zweiarmzentrifugen bekannt. Herkömmliche Zweiarmzentrifugen umfassen einen länglichen, schienenförmigen Käfig, der zentral um eine Drehachse gedreht wird. In dem Käfig kann ein Schlitten verfahren werden, in dem eine Person sitzt. Gemäß Stand der Technik ist der drehbar angeordnete Käfig symmetrisch um eine Hauptdrehachse angeordnet. Durch Drehen des Käfigs und gleichzeitiges Verschieben des Schlittens von der neutralen Mittelposition auf die eine oder die andere Seite der Drehachse können für die Person Beschleunigungen in unterschiedliche Richtungen erzeugt werden. Nachteilig an herkömmlichen Zweiarmzentrifugen ist, dass diese aufgrund ihrer hohen Masse nicht dazu geeignet sind, Beschleunigungen von mehr als 3G wahrnehmungsgetreu zu erzeugen, da die dazu erforderliche Winkelgeschwindigkeit der Drehung des Käfigs unzulässige bzw. nicht wahrnehmungsgetreue Sekundärkräfte oder Störkräfte erzeugt. Auch durch eine Vergrößerung der Armlänge der beidseitig auskragenden Arme einer herkömmlichen Anlage ist keine Verbesserung zu erzielen, da durch die Vergrößerung der herkömmlichen Anlage die Massenträgheit steigt und somit die Festigkeitsgrenzen der Zentrifuge überschritten werden.

Zur Simulation höherer Beschleunigungen im Bereich von über 3G werden gemäß Stand der Technik Einarmzentrifugen eingesetzt. Bei einer Einarmzentrifuge wird eine Kabine drehbar, aber nicht verschiebbar, am äußeren Ende eines auskragenden Arms in einem Normalabstand um eine Hauptdrehachse angeordnet. Zwar können mit einer derartigen Einarmzentrifuge hohe Beschleunigungen simuliert werden. Schnell wechselnde kleine Beschleunigungen und schnell wechselnde Beschleunigungsrichtungen, beispielsweise Orientierungsänderungen der Beschleunigung um 180° wie sie beispielsweise bei einer Slalomfahrt eines Automobils oder bei statischen Flugsituationen auftreten und die im Wesentlichen bei normaler (einfacher) Erdbeschleunigung erfolgen, können mit Einarmzentrifugen nicht in ausreichender Genauigkeit simuliert werden.

Somit besteht bei Vorrichtungen zur räumlichen Bewegung einer Person und insbesondere bei Bewegungs-, Beschleunigungs- oder Orientierungssimulatoren ein Zielkonflikt zwischen
- wahrnehmungsgetreuer Darstellung hochfrequenter kleiner Beschleunigungsänderungen die gegebenenfalls bei einfacher Erdbeschleunigung auftreten sollen und
- der wahrnehmungsgetreuen Darstellung hoher Beschleunigungen und hoher Beschleunigungsgradienten, die gegebenenfalls auch hochfrequent auftreten.

Aufgabe der Erfindung ist es insbesondere diesen Zielkonflikt zu lösen.

Die erfindungsgemäße Aufgabe wird insbesondere durch die Merkmale der unabhängigen Patentansprüche gelöst.

Die Erfindung betrifft insbesondere eine Vorrichtung, insbesondere einen Flugsimulator, einen Bewegungssimulator oder einen Orientierungssimulator, zur räumlichen Bewegung von zumindest einer Person und insbesondere zur Simulation von Beschleunigungsabfolgen, wobei eine Haltevorrichtung zur Halterung einer Person im Bereich eines Zentrums vorgesehen ist, wobei die Haltevorrichtung über eine Bewegungsvorrichtung an einem Schlitten angebracht ist, wobei der Schlitten entlang eines (bevorzugt horizontal verlaufenden) Hauptträgers verfahrbar ist und insbesondere linear verfahrbar ist, wobei der Hauptträger drehbar um eine (bevorzugt vertikal verlaufende) Hauptdrehachse gelagert, antreibbar und gegebenenfalls von einem Hauptantrieb angetrieben ist, wobei der Hauptträger einen ersten Hauptarm und einen zweiten Hauptarm aufweist, wobei sich die beiden Hauptarme in entgegengesetzte Richtungen radial von der Hauptdrehachse nach außen erstrecken, wobei das Zentrum durch Verfahren des Schlittens entlang eines Fahrweges am Hauptträger zwischen einer ersten äußeren Maximalstellung und einer zweiten äußeren Maximalstellung verfahrbar ist, wobei in der ersten äußeren Maximalstellung des Zentrums der Schlitten am ersten Hauptarm angeordnet ist, wobei in der zweiten äußeren Maximalstellung des Zentrums der Schlitten am zweiten Hauptarm angeordnet ist, wobei der Normalabstand zwischen der ersten äußeren Maximalstellung des Zentrums und der Hauptdrehachse größer ist, als der Normalabstand zwischen der zweiten äußeren Maximalstellung des Zentrums und der Hauptdrehachse. Gegebenenfalls ist vorgesehen, dass der Fahrweg des Zentrums entlang des Hauptträgers durch die erste äußere Maximalstellung und die zweite äußere Maximalstellung begrenzt ist. Gegebenenfalls ist vorgesehen, dass der erste Hauptarm, normal zur Hauptdrehachse gemessen, länger ist, als der zweite Hauptarm oder dass die Hauptdrehachse relativ zum Hauptträger entlang der Längserstreckung des Hauptträgers asymmetrisch angeordnet ist. Gegebenenfalls ist vorgesehen, dass der Hauptträger entlang des Fahrweges ein wannenförmiges oder U-förmiges Profil aufweist, und dass der Schlitten am oder im Hauptträger geführt ist und zumindest teilweise vom Hauptträger umgriffen ist. Gegebenenfalls betrifft die Erfindung eine Bewegungsvorrichtung und/oder eine Kabine für eine Person. Gegebenenfalls ist vorgesehen, dass die Bewegungsvorrichtung ein erstes Trägerelement umfasst, das starr mit der Haltevorrichtung verbunden oder verbindbar angeordnet ist, dass das erste Trägerelement um eine erste Nebenachse drehbar gegenüber dem Schlitten antreibbar oder angetrieben ist, und/oder dass die erste Nebenachse durch das Zentrum verläuft. Gegebenenfalls ist vorgesehen, dass die Bewegungsvorrichtung ein erstes Trägerelement umfasst, das starr mit der Haltevorrichtung verbunden oder verbindbar angeordnet ist, dass das erste Trägerelement um eine erste Nebenachse drehbar gegenüber dem Schlitten antreibbar oder angetrieben ist, dass die erste Nebenachse durch das Zentrum verläuft, dass die Bewegungsvorrichtung ein zweites Trägerelement umfasst, dass das erste Trägerelement um die erste Nebenachse drehbar gegenüber dem zweiten Trägerelement antreibbar oder angetrieben ist, und dass das zweite Trägerelement um eine zweite Nebenachse drehbar gegenüber dem Schlitten antreibbar oder angetrieben ist, dass die erste Nebenachse und die zweite Nebenachse im Wesentlichen orthogonal zueinander verlaufen und dass die erste Nebenachse und die zweite Nebenachse im Zentrum den geringsten Normalabstand zueinander aufweisen oder sich im Zentrum schneiden. Gegebenenfalls ist vorgesehen, dass die Bewegungsvorrichtung ein erstes Trägerelement umfasst, das starr mit der Haltevorrichtung verbunden oder verbindbar angeordnet ist, dass das erste Trägerelement um eine erste Nebenachse drehbar gegenüber dem Schlitten antreibbar oder angetrieben ist, dass die erste Nebenachse durch das Zentrum verläuft, dass die Bewegungsvorrichtung ein zweites Trägerelement umfasst, dass das erste Trägerelement um die erste Nebenachse drehbar gegenüber dem zweiten Trägerelement antreibbar oder angetrieben ist, dass das zweite Trägerelement um eine zweite Nebenachse drehbar gegenüber dem Schlitten antreibbar oder angetrieben ist, dass die erste Nebenachse und die zweite Nebenachse im Wesentlichen orthogonal zueinander verlaufen, dass die erste Nebenachse und die zweite Nebenachse im Zentrum den geringsten Normalabstand zueinander aufweisen oder sich im Zentrum schneiden, dass die Bewegungsvorrichtung ein drittes Trägerelement umfasst, dass das zweite Trägerelement um die zweite Nebenachse drehbar gegenüber dem dritten Trägerelement antreibbar oder angetrieben ist, dass das dritte Trägerelement um eine dritte Nebenachse drehbar gegenüber dem Schlitten antreibbar oder angetrieben ist, dass die zweite Nebenachse und die dritte Nebenachse im Wesentlichen orthogonal zueinander verlaufen und dass die zweite Nebenachse und die dritte Nebenachse im Zentrum den geringsten Normalabstand zueinander aufweisen oder sich im Zentrum schneiden. Gegebenenfalls ist vorgesehen, dass die Bewegungsvorrichtung eine Hubvorrichtung zur translatorischen und insbesondere zur linearen Bewegung der Haltevorrichtung, der Haltevorrichtung, des ersten Trägerelements, des zweiten Trägerelements und/oder gegebenenfalls des dritten Trägerelements umfasst. Gegebenenfalls ist vorgesehen, dass die Bewegungsrichtung der Hubvorrichtung im Wesentlichen parallel zur Hauptdrehachse und/oder normal zum Fahrweg verläuft und dass die Hubvorrichtung einen oder mehrere Linearantriebe wie insbesondere einen elektrischen oder hydraulischen Linearantrieb oder eine Parallelkinematikanordnung umfasst. Gegebenenfalls ist vorgesehen, dass die Haltevorrichtung in einer Kabine angeordnet ist, und dass in der Kabine eine Bildwiedergabefläche zur bildlichen Darstellung einer Simulationsumgebung vorgesehen ist. Gegebenenfalls ist vorgesehen, dass in der Kabine eine Nachbildung eines zu simulierenden Objektes vorgesehen ist, wobei die Nachbildung des zu simulierenden Objektes insbesondere die Nachbildung eines Flugzeugcockpits, eines Fahrzeugcockpits, eines Hubschraubercockpits oder eines Schiffscockpits ist. Gegebenenfalls ist vorgesehen, dass im Bereich der Haltevorrichtung Bedienelemente vorgesehen sind, dass die Bedienelemente mit einer Steuerungseinrichtung und/oder mit einer Datenverarbeitungsvorrichtung wie beispielsweise Computer verbunden sind, dass über die Bedienelemente die Bewegung der Vorrichtung und insbesondere die Simulation beeinflussbar ist, sodass die in der Kabine befindliche Person das simulierte Objekt oder die Bewegung der Vorrichtung steuern kann. Gegebenenfalls ist vorgesehen, dass die Kabine geschlossen oder schließbar ausgebildet ist, und dass die Kabine eine durch eine Kabinentüre verschließbare Kabinenöffnung aufweist. Gegebenenfalls ist vorgesehen, dass die Bildwiedergabefläche und/oder die Kabine am zweiten Trägerelement oder gegebenenfalls am dritten Trägerelement vorgesehen ist, sodass die Haltevorrichtung zumindest einen antreibbaren Drehfreiheitsgrad gegenüber der Bildwiedergabefläche und/oder der Kabine aufweist. Gegebenenfalls ist vorgesehen, dass das zweite Trägerelement ringförmig oder C-förmig ausgebildet ist und starr mit der Kabine verbunden ist, oder dass das zweite Trägerelement einen ringförmigen oder C-förmigen Abschnitt umfasst und die Kabine ein Teil des zweiten Trägerelements ist. Gegebenenfalls ist vorgesehen, dass das dritte Trägerelement ringförmig ausgebildet ist und sich rund um die Kabine erstreckt. Gegebenenfalls ist vorgesehen, dass das dritte Trägerelement ringförmig ausgebildet ist und sich rund um die Kabine erstreckt und dass im dritten Trägerelement Ausnehmungen zur Aufnahme von Drehantrieben vorgesehen sind, wobei die im dritten Trägerelement vorgesehenen Drehantriebe zur Drehung des zweiten Trägerelements um die zweite Nebenachse und zur Drehung des dritten Trägerelements um die dritte Nebenachse eingerichtet sind. Gegebenenfalls ist vorgesehen, dass die Hubvorrichtung am dritten Trägerelement und insbesondere im Bereich der dritten Nebenachse angreift. Gegebenenfalls ist vorgesehen, dass das erste Trägerelement als Kragträger ausgebildet ist, der einseitig insbesondere hinter der Haltevorrichtung mit dem zweiten Trägerelement drehbar verbunden ist, sodass sich das erste Trägerelement hinter und/oder unter der Person von der Haltevorrichtung bis zum zweiten Trägerelement erstreckt. Gegebenenfalls ist vorgesehen, dass der Schlitten über eine Schlittenantriebsvorrichtung am Hauptträger verfahrbar ist. Gegebenenfalls ist vorgesehen, dass der Schlitten über eine Schlittenantriebsvorrichtung am Hauptträger verfahrbar ist, wobei die Schlittenantriebsvorrichtung als Seilantrieb, als Hydraulikantrieb, als Direktantrieb oder als Direktantrieb mit Radiallastkompensation ausgebildet ist. Gegebenenfalls ist vorgesehen, dass die Schlittenantriebsvorrichtung als Seilantrieb ausgebildet ist, der folgende Komponenten umfasst: ein um mehrere Umlenkrollen umgelenktes Seil, das teilweise am Hauptträger fixiert ist und bevorzugt mit einem Ende, mit beiden Enden oder mit zumindest einem Abschnitt am Hauptträger fixiert ist oder angreift; Hauptträgerumlenkrollen, die drehbar am Hauptträger gelagert sind, wobei die Hauptträgerumlenkrollen an beiden Außenbereichen des Hauptträgers angeordnet sind; gegebenenfalls oder zumindest eine, bevorzugt zwei Umlenkrollen, die drehbar am Schlitten gelagert sind; eine Seilantriebsrolle zum Antrieb des Seilantriebs. Gegebenenfalls ist vorgesehen, dass die Seilantriebsrolle bevorzugt koaxial mit der Hauptdrehachse des Hauptantriebs angeordnet ist, wobei bei gegenüber dem Hauptträger stillstehendem Schlitten die Seilantriebsrolle und der Hauptantrieb dieselbe Winkelgeschwindigkeit aufweisen, und wobei zur Bewegung des Schlittens am Hauptträger die Seilantriebsrolle und der Hauptantrieb eine Winkelgeschwindigkeitsdifferenz aufweisen. Gegebenenfalls ist vorgesehen, dass der Antrieb der Seilantriebsrolle ortsfest und insbesondere ortsfest im Fundament angeordnet ist. Gegebenenfalls ist vorgesehen, dass die Schlittenantriebsvorrichtung als hydraulische Antriebsvorrichtung ausgebildet ist, wobei als Antrieb zum Verschieben des Schlittens am Hauptträger ein hydraulischer Zylinder vorgesehen ist. Gegebenenfalls ist vorgesehen, dass die Schlittenantriebsvorrichtung als Direktantrieb ausgebildet ist, wobei der Direktantrieb Antriebsräder umfasst, die drehbar und antreibbar am Schlitten angebracht sind, wobei die Antriebsräder an Teilen des Hauptträgers abrollen, um eine Verschiebung des Schlittens gegenüber dem Hauptträger zu bewirken, und wobei die Antriebe für die mit dem Schlitten verbundenen Antriebsräder am Schlitten selbst angeordnet sind. Gegebenenfalls ist vorgesehen, dass die Schlittenantriebsvorrichtung als Direktantrieb mit zusätzlicher Radiallastkompensation ausgebildet ist, wobei ein Radiallastkompensationsantrieb ortsfest und insbesondere im Fundament angeordnet ist, wobei von diesem Radiallastkompensationsantrieb ein oder mehrere Zugelemente bis zum Schlitten reichen und insbesondere an einem Ende mit dem Schlitten verbunden ist oder sind, sodass durch das Zugelement vorrangig die Radialbeschleunigung kompensiert ist, um insbesondere eine Gegenkraft zur Radialbeschleunigung zu erzeugen und eine funktionale Trennung von "Halten" des Schlittens durch die Radiallastkompensation und "Bewegen" des Schlittens durch den Direktantrieb gegeben ist. Gegebenenfalls ist vorgesehen, dass das Zugelement oder die Zugelemente im Bereich der Hauptdrehachse in den Hauptträger geführt ist oder sind. Gegebenenfalls ist vorgesehen, dass das Zugelement oder die Zugelemente als Flaschenzug ausgebildet ist oder sind. Gegebenenfalls ist vorgesehen, dass der Hauptantrieb zur Drehung des Hauptträgers um die Hauptdrehachse einen hydraulischen Hauptträgerantrieb oder einen elektrischen Hauptträgerantrieb umfasst. Gegebenenfalls ist vorgesehen, dass der Hauptantrieb mehrere Hauptträgerantriebe, beispielsweise 2, 3, 4, 5, 6, 7, 8, 9, 10, 11, 12, 13, 14, 15, 16, 17, 18, 19, 20, 21, 22 oder mehr Hauptträgerantriebe umfasst. Gegebenenfalls ist vorgesehen, dass die Hauptträgerantriebe über einen Zahnkranz und/oder über Reibringe an einem mit dem Hauptträger verbundenen zentralen Element angreifen, um den Hauptträger um seine Hauptdrehachse rotatorisch anzutreiben. Gegebenenfalls ist vorgesehen, dass die erste Nebenachse der Rollachse der Person entspricht. Gegebenenfalls ist vorgesehen, dass der Normalabstand des Zentrums von der Hauptdrehachse in der ersten äußeren Maximalstellung zwischen 4 und 8 Meter, zwischen 5 und 7 Meter und/oder etwa 6 Meter beträgt. Gegebenenfalls ist vorgesehen, dass der Abstand des Zentrums von der Hauptdrehachse in der zweiten äußeren Maximalstellung zwischen 0 und 8 Meter, zwischen 0,2 und 4 Meter, zwischen 0,5 und 4 Meter, zwischen 1 und 3 Meter und/oder insbesondere etwa 0,2 Meter; 0,5 Meter; 1 Meter, 1,5 Meter; 2 Meter; oder insbesondere 3 Meter beträgt. Gegebenenfalls ist vorgesehen, dass der Normalabstand des Zentrums von der Hauptdrehachse in der ersten äußeren Maximalstellung zumindest 2 Mal, insbesondere zwischen 2 und 4 Mal; 3 Mal; 5Mal; 10Mal; 20Mal oder insbesondere 100Mal größer ist, als der Normalabstand des Zentrums von der Hauptdrehachse in der zweiten äußeren Maximalstellung. Die Erfindung betrifft insbesondere eine Vorrichtung, insbesondere Flugsimulator oder Bewegungssimulator, zur räumlichen Bewegung von zumindest einer Person und insbesondere zur Simulation von Beschleunigungsabfolgen insbesondere nach einem der vorangegangenen Ansprüche umfassend eine Haltevorrichtung zur Halterung einer Person im Bereich eines Zentrums, wobei die Haltevorrichtung über eine Bewegungsvorrichtung an einem Schlitten angebracht ist, wobei der Schlitten entlang eines horizontal verlaufenden Hauptträgers verfahrbar ist und insbesondere linear verfahrbar ist, wobei der Hauptträger drehbar um eine vertikal verlaufende Hauptdrehachse gelagert, antreibbar und gegebenenfalls angetrieben ist, wobei der Hauptträger einen ersten Hauptarm und einen zweiten Hauptarm aufweist, wobei sich die beiden Hauptarme in entgegengesetzte Richtungen radial von der Hauptdrehachse nach außen erstrecken, wobei der Schlitten entlang des ersten Hauptarms und des zweiten Hauptarms verfahrbar ist, wobei der erste Hauptarm normal zur Hauptdrehachse gemessen länger ist, als der zweite Hauptarm und/oder oder wobei die Hauptdrehachse relativ zum Hauptträger entlang der Längserstreckung des Hauptträgers asymmetrisch angeordnet ist.

Die Erfindung betrifft insbesondere eine Vorrichtung, beispielsweise einen Flugsimulator oder einen Bewegungssimulator, zur räumlichen Bewegung von zumindest einer Person und insbesondere zur Simulation von Beschleunigungszuständen umfassend:
- einen (gegebenenfalls horizontal verlaufenden) Hauptträger, der drehbar um eine (gegebenenfalls vertikal verlaufende) Hauptdrehachse gelagert, antreibbar und bevorzugt angetrieben ist, wobei der Hauptträger einen ersten Hauptträgerabschnitt und einen zweiten Hauptträgerabschnitt aufweist, die sich in entgegengesetzte Richtungen radial von der Hauptdrehachse nach außen erstrecken, einen Schlitten, der entlang eines Fahrweges entlang des Hauptträgers und insbesondere entlang des ersten Hauptträgerabschnitts und des zweiten Hauptträgerabschnitts verfahrbar ist, wobei der Fahrweg von einer ersten Maximalstellung im Bereich des äußeren Endes des ersten Hauptträgerabschnitts über die Hauptdrehachse und weiter bis zu einer zweiten Maximalstellung im Bereich des äußeren Endes des zweiten Hauptträgerabschnitts verläuft und insbesondere im Wesentlichen geradlinig die Hauptdrehachse schneidend, weitestgehend schneidend oder im Wesentlichen schneidend verläuft, eine Haltevorrichtung zur Aufnahme, Anlage oder Befestigung einer Person im Bereich eines Zentrums, wobei die Haltevorrichtung über eine Bewegungsvorrichtung mit dem Schlitten verbunden ist, wobei der erste Hauptträgerabschnitt länger ausgebildet ist als der zweite Hauptträgerabschnitt und/oder dass das Zentrum in der ersten Maximalstellung einen größeren Normalabstand zur Hauptdrehachse aufweist als in der zweiten Maximalstellung.

In weiterer Folge werden exemplarische Parameter, Ausführungsformen und Variationsmöglichkeiten einer erfindungsgemäßen Vorrichtung weiter erörtert:
Gegebenenfalls ist die Vorrichtung derart ausgestaltet, dass eine dauerhaft auf die Person wirkende G-Belastung von bis zu oder etwa 7G erzeugbar ist. Gegebenenfalls beträgt der erreichbare Anstieg bzw. der Gradient der dauerhaft erzeugbaren G-Belastung pro Zeiteinheit etwa 3G/Sekunde, sodass alleine durch die Drehung des Hauptträgers die Person in einer Sekunde von 1G auf 4G und in zwei Sekunden von 1G auf 7G beschleunigt werden kann.

Zur Erzielung dieser oder ähnlicher Beschleunigungswerte beträgt der Normalabstand der ersten äußeren Maximalstellung des Zentrums, das im Bereich der Person liegt, von der Hauptdrehachse beispielsweise etwa sechs Meter. Der Abstand der zweiten äußeren Maximalstellung des Zentrums von der Hauptdrehachse beträgt beispielsweise etwa zwei Meter.

Die Schlittenmasse beträgt beispielsweise 8 bis 16 Tonnen, gegebenenfalls um 12 Tonnen. Die maximale auf die Person wirkende Radialbeschleunigung liegt gegebenenfalls im Bereich von 7G, was beispielsweise einer Winkelgeschwindigkeit von etwa drei bis vier Rad/s bei einem Bewegungsradius des Zentrums von etwa sechs Metern entspricht.

Die maximale Schlittengeschwindigkeit beträgt beispielsweise 2-5m/s, bevorzugt 3-4m/s und gegebenenfalls etwa 3,2m/s. Die maximale Beschleunigung durch den Schlittenantrieb beträgt beispielsweise etwa 5m/s² bei etwa 2,2 Rad/s (entspricht etwa 3G bei 6 Meter Radius des Zentrums um die Hauptdrehachse). Die Bewegung des Schlittens kann in allen Ausführungsbeispielen bevorzugt auch noch bei 7G gegen die Radialbeschleunigungskräfte erfolgen. Eine Vorrichtung mit diesen Parametern kann beispielsweise eine künstliche Beschleunigung von 1G auf 7G zwei Sekunden erzielen.

Zum Antrieb der unterschiedlichen Komponenten der erfindungsgemäßen Vorrichtung können unterschiedliche Antriebskonzepte eingesetzt werden.

Zum Antrieb des Schlittens und insbesondere als Schlittenantriebsvorrichtung zum Verfahren des Schlittens entlang des Hauptträgers können hydraulische oder elektrische Antriebe eingesetzt werden. Auch der Hauptantrieb, der zur Drehung des Hauptträgers eingerichtet ist, kann ein hydraulischer oder ein elektrischer Antrieb sein.

Gegebenenfalls ist ein Energieversorgungssystem vorgesehen, durch das die maximal von außen bereitzustellende Spitzenenergie verringert werden kann. Für starke Drehzahländerungen des Hauptantriebs beispielsweise ist der Energiebedarf um ein Vielfaches höher, als bei konstantem Betrieb. Beispielsweise kann bei einem hydraulischen Antriebskonzept ein Druckspeicher vorgesehen sein, der kurzzeitige Bedarfsspitzen ausgleicht. Bei einem rein elektrischen Antrieb kann eine Schwungmasse vorgesehen und insbesondere eine mit dem Hauptantrieb drehverbundene oder drehbar gekoppelte Schwungmasse vorgesehen sein, um Leistungsbedarfsspitzen zu überbrücken.

Gegebenenfalls ist der Hauptantrieb als elektrischer Antrieb ausgebildet. Zum Antrieb kommen bevorzugt mehrere elektrische Antriebe, beispielsweise 2, 3, 4, 5, 6, 7, 8, 9, 10, 11, 12, 13, 14, 15, 16 ,17 ,18, 19, 20 oder mehr Antriebe zum Einsatz. Diese Antriebe weisen beispielsweise gemeinsam eine Leistung von etwa 3-5MW auf. Das maximal erzeugte Drehmoment beträgt beispielsweise 1-3MNm. Die Antriebe greifen beispielsweise über einen Zahnkranz oder Reibringe am Hauptträger und insbesondere an einem mit dem Hauptträger verbundenen zentralen Element an, um den Hauptträger um seine Hauptdrehachse anzutreiben und zu drehen.

Gegebenenfalls ist der Hauptantrieb ein hydraulischer Hauptantrieb. Die Spitzenleistung eines möglichen hydraulischen Hauptantriebs beträgt beispielsweise etwa 4-6MW bei einer Hydraulikleistung von beispielsweise etwa 10.600 l/min und einem Druck von beispielsweise etwa 300bar.

Die Schlittenantriebsvorrichtung ist gegebenenfalls als Seilzug ausgebildet. Eine derartige Schlittenantriebsvorrichtung ist beispielsweise aus der Patentanmeldung WO2010040505A1 bekannt. Bei diesem exemplarischen Seilantrieb ist ein Seil um mehrere Umlenkrollen umgelenkt. Dabei sind Hauptträgerumlenkrollen drehbar am Hauptträger gelagert. Ferner gibt es zumindest eine Umlenkrolle, bevorzugt zwei Umlenkrollen, die drehbar am Schlitten gelagert sind. Darüber hinaus ist das Seil bevorzugt mit einem Ende oder mit beiden Enden am Hauptträger fixiert. Ferner ist eine Seilantriebsrolle für den Seilantrieb vorgesehen. Die Seilantriebsrolle ist bevorzugt koaxial mit der Hauptdrehachse des Hauptantriebs angeordnet. Soll der Schlitten gegenüber dem Hauptträger beispielsweise stillstehen, so weisen die Seilantriebsrolle und der Hauptantrieb dieselbe Drehzahl auf. Zur Bewegung des Schlittens am Hauptarm weisen die Seilantriebsrolle und der Hauptantrieb eine Drehzahldifferenz auf. Dadurch kommt es zu einer Längenänderung einzelner Seilabschnitte und der Schlitten wird am Hauptträger verfahren. Der Antrieb der Seilantriebsrolle kann dabei ortsfest und insbesondere im Fundament vorgesehen sein.

Gegebenenfalls ist die Schlittenantriebsvorrichtung als hydraulische Antriebsvorrichtung ausgebildet. Dabei ist am Hauptträger ein hydraulischer Zylinder vorgesehen, der als Antrieb zum Verschieben des Schlittens am Hauptträger eingerichtet ist.

Gegebenenfalls ist die Schlittenantriebsvorrichtung als Direktantrieb und insbesondere als Direktantrieb mit Radiallastkompensation ausgebildet. Der Direktantrieb umfasst beispielsweise Antriebsräder und/oder Zahnräder die drehbar und antreibbar am Schlitten angebracht sind. Die Räder rollen bevorzugt an Teilen des Hauptträgers ab, um eine Verschiebung des Schlittens gegenüber dem Hauptträger zu bewirken. Die Antriebe für die mit dem Schlitten verbundenen Räder sind bevorzugt am Schlitten selbst angeordnet.

Um einen Antrieb und ein Verschieben des Schlittens entlang des Hauptträgers auch bei hohen Radialbeschleunigungen zu ermöglichen, kann zusätzlich zu dem Direktantrieb eine Radiallastkompensationsvorrichtung vorgesehen sein. Bei dieser Radiallastkompensation ist beispielsweise ein Antrieb ortsfest und insbesondere im Fundament vorgesehen. Von diesem Antrieb reichen ein oder mehrere Zugelemente bis zum Schlitten und sind insbesondere an einem Ende oder mit einer Seilschlinge mit dem Schlitten verbunden. Gegebenenfalls sind die Zugelemente als Flaschenzug ausgebildet. Bevorzugt sind die Zugelemente oder ist das Zugelement im Bereich der Hauptdrehachse in den Hauptträger geführt. Durch das Zugelement wird vorrangig die Radialbeschleunigung oder Teile der Radialbeschleunigung kompensiert, um insbesondere eine Gegenkraft zur Radialbeschleunigung zu erzeugen. Somit erfolgt bei dieser Lösung eine funktionale Trennung von "Halten" des Schlittens durch die Radiallastkompensationsvorrichtung und "Bewegen" des Schlittens durch Direktantrieb.

In allen Ausführungsformen ist der Schlitten bevorzugt am Hauptträger geführt. Diese Führung kann beispielsweise als Kombination einer Gleitschiene und einer auf der Gleitschiene geführten Gleitführung ausgeführt sein, wobei eine der Komponenten mit dem Schlitten und eine der Komponenten mit dem Hauptträger bevorzugt starr gekoppelt ist. Bevorzugt ist der Schlitten an mehreren Stellen am Hauptträger geführt. Dazu können mehrere Gleitschienen und mehrere Gleitführungen vorgesehen sein. Bei U-förmiger Ausgestaltung des Hauptträgers kann eine Führung des Schlittens im unteren Bereich und/oder im Bodenbereich des U-förmigen Trägers erfolgen. Zusätzlich kann bei U-förmiger Ausgestaltung des Trägers auch eine Führung im Mittenbereich und/oder im Bereich der Schenkelenden des U-förmigen Trägers erfolgen. Bevorzugt sind die Gleitschienen entlang des Fahrweges am Hauptträger montiert und erstrecken sich vom ersten Hauptarm über die Hauptdrehachse hinweg auf den zweiten Hauptarm.

Gegebenenfalls ist vorgesehen, dass der erste Hauptarm und der zweite Hauptarm frei von der Hauptdrehachse oder von einem zentralen Element auskragen. In dieser Ausführungsform ist der Hauptträger im Außenbereich bevorzugt frei von Führungsvorrichtungen zur Abstützung gegenüber der Umgebung. Jedoch können gemäß einer weiteren Ausführungsform auch im Außenbereich Führungsvorrichtungen zur Abstützung oder Lagerung der auskragenden Teile des Hauptträgers vorgesehen sein.

Ferner umfasst die erfindungsgemäße Vorrichtung bevorzugt eine Haltevorrichtung für eine Person, die über eine Bewegungsvorrichtung mit dem Schlitten gekoppelt ist. Die Bewegungsvorrichtung ermöglicht einen oder mehrere Freiheitsgrade und insbesondere angetriebene Freiheitsgrade der Haltevorrichtung gegenüber dem Schlitten. Die Haltevorrichtung ist bevorzugt als Sitz ausgebildet, auf dem eine Person festgeschnallt werden kann. Bevorzugt ist neben dem Sitz auch eine Nachbildung eines Cockpits für das zu simulierende Objekt vorgesehen. Bevorzugt sind Bedienelemente vorgesehen, über die die Person auf die Bewegung bzw. auf die Simulation Einfluss nehmen kann.

Gemäß einer bevorzugten Konfiguration entspricht die erste Nebenachse der Rollachse. Die zweite Nebenachse entspricht gegebenenfalls der Gierachse. Die dritte Nebenachse entspricht gemäß dieser Ausführungsform beispielsweise der Nickachse. Gemäß einer weiteren Ausführungsform entspricht die erste Nebenachse der Gierachse. Die zweite Nebenachse entspricht gegebenenfalls der Nickachse. Gemäß dieser Ausführungsform entspricht die dritte Nebenachse bevorzugt der Rollachse.

Bevorzugt ist eine Kabine vorgesehen, die die Haltevorrichtung und in weiterer Folge die an der Haltevorrichtung angeschnallte Person umgibt. An oder in dieser Kabine ist bevorzugt eine Bildwiedergabefläche vorgesehen. Bevorzugt sind die Trägerelemente derart angeordnet, dass sie zu jederzeit und in jeder Stellung außerhalb des Sichtfeldes der Person liegen.

Gegebenenfalls ist vorgesehen, dass die Kabine am zweiten oder am dritten Trägerelement vorgesehen ist oder mit einem dieser Trägerelemente starr verbunden ist. Dadurch weist die Haltevorrichtung einen oder zwei Drehfreiheitsgrade gegenüber der Bildwiedergabefläche auf. Insbesondere ist das erste Trägerelement derart ausgestaltet, dass es in jeder Stellung außerhalb des Sichtfeldes der Person liegt.

Bevorzugt weist die Kabine eine schließbare Öffnung auf. Die Öffnung ist bevorzugt derart ausgestaltet, dass sowohl die Person als auch das gegebenenfalls vorgesehene Cockpit einfach entfernt oder eingebracht werden kann. Dazu ist gegebenenfalls ein Schienensystem vorgesehen, das ein geführtes Bewegen des gegebenenfalls vorgesehenen Cockpits erleichtert.

Gegebenenfalls ist das erste Trägerelement bügel- oder C-förmig ausgebildet. Gegebenenfalls ist das erste Trägerelement als geschwungener Kragträger ausgebildet. Gegebenenfalls umfasst das zweite Trägerelement eine oder mehrere Freistellungen zur Aufnahme eines oder mehrerer Drehantriebe. Diese(r) Drehantrieb(e) sind insbesondere dazu geeignet und/oder eingerichtet, die Haltevorrichtung um die erste Nebenachse zu drehen.

Gegebenenfalls ist das zweite Trägerelement C-förmig ausgebildet. Gegebenenfalls ist das zweite Trägerelement, das C-förmig ausgebildet ist, starr mit der Kabine verbunden. Gegebenenfalls ist die Kabine ein Teil des zweiten Trägerelements.

Gegebenenfalls ist das dritte Trägerelement ringförmig ausgeführt. Gegebenenfalls umfasst das dritte Trägerelement Freistellungen zur Aufnahme von Drehantrieben. Diese Drehantriebe sind insbesondere dazu geeignet und/oder eingerichtet, die Haltevorrichtung um die zweite Nebenachse und gegebenenfalls um die dritte Nebenachse zu drehen.

Bevorzugt kann der Schlitten entlang des Fahrweges in beliebige Zwischenstellungen zwischen den beiden Maximalstellungen verfahren und dort gegenüber dem Hauptträger angehalten werden. Das Verfahren des Schlittens kann bevorzugt auch bei einer Drehung des Hauptträgers erfolgen.

Gegebenenfalls sind in allen Ausführungsformen ein oder mehrere Datenverarbeitungsvorrichtungen wie beispielsweise Computer vorgesehen. Diese werden beispielsweise zur Steuerung oder Regelung von Antrieben und/oder zur Darstellung und/oder Berechnung des Simulationsmodells eingesetzt.

Die Erfindung wird nun anhand konkreter Ausführungsbeispiele weiter beschrieben.
Fig. 1 zeigt eine erfindungsgemäße Vorrichtung in einer teilweisen Schnittdarstellung, wobei die Richtung des Fahrweges des Schlittens im Wesentlichen projizierend verläuft.
Fig. 2 zeigt eine teilweise Schnittdarstellung in einer erfindungsgemäßen Vorrichtung, wobei der Fahrweg des Schlittens im Wesentlichen in der Bildebene verläuft.
Fig. 3 zeigt eine Ansicht einer erfindungsgemäßen Vorrichtung von oben.
Fig. 4 zeigt eine schematische Ansicht bzw. Schnittdarstellung einer erfindungsgemäßen Vorrichtung.
Fig. 5 zeigt eine weitere schematische Ansicht bzw. Schnittdarstellung einer erfindungsgemäßen Vorrichtung.
Fig. 6 zeigt ein Detail einer erfindungsgemäßen Vorrichtung.

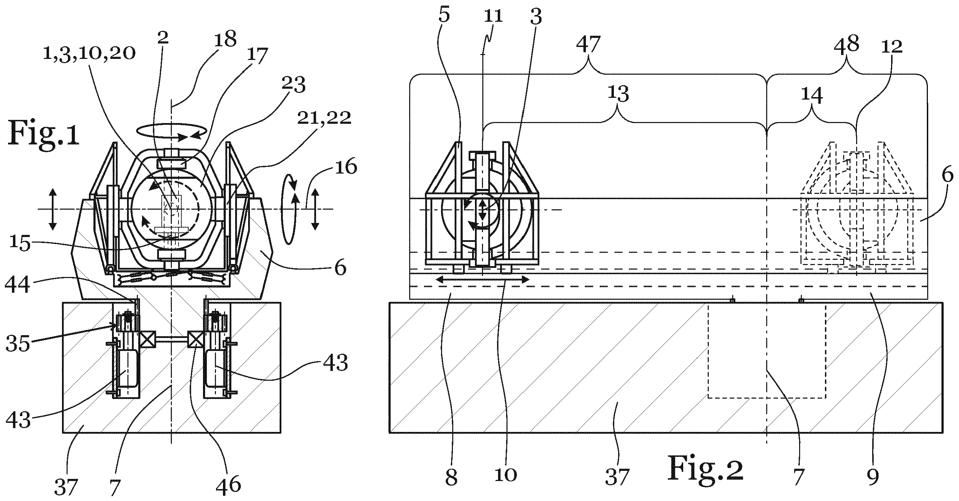

Fig. 1 zeigt eine erfindungsgemäße Vorrichtung in einer schematischen Ansicht einer teilweisen Schnittdarstellung.

Die Vorrichtung ist bevorzugt an einem Fundament 37 angeordnet. Dieses Fundament 37 kann beispielsweise ein Betonfundament sein. Mit dem Fundament 37 sind ein oder mehrere Hauptträgerantriebe 43 verbunden. Die Hauptträgerantriebe 43 sind Teile des Hauptantriebs 35. Der Hauptantrieb 35 ist dazu eingerichtet und/oder geeignet, eine Rotation des Hauptträgers 6 um die Hauptdrehachse 7 zu bewirken und insbesondere um den Hauptträger 6 um die Hauptdrehachse 7 rotatorisch anzutreiben. Dazu umfasst der Hauptantrieb 35 in der vorliegenden Ausführung mit den Hauptträgerantrieben 43 gekoppelte oder verbundene Zahnräder, die in einen Zahnkranz 44 eingreifen. Der Zahnkranz 44 ist bevorzugt starr mit dem Hauptträger 6 verbunden und insbesondere koaxial mit der Hauptdrehachse 7 angeordnet. Durch Antrieb der Hauptträgerantriebe 43 wird der Zahnkranz 44 rotatorisch angetrieben, wodurch auch der Hauptträger 6 angetrieben wird. Gegebenenfalls umfasst der Hauptantrieb zusätzlich oder alternativ zu Zahnrädern Reibräder, die eine Übertragung des Drehmoments vom Hauptträgerantrieb 43 auf den Hauptträger 6 über Reibringe bewirkt. In allen Ausführungsformen können entweder Reibringe, Zahnräder oder eine Kombination der beiden Konfigurationen zum Antrieb des Hauptträgers 6 eingesetzt sein.

Bevorzugt ist im Bereich des Fundaments oder zwischen den ortsfest angeordneten Komponenten der Vorrichtung und dem Hauptträger 6 ein Hauptlager 46 vorgesehen. Dieses Hauptlager kann insbesondere als Radiallager, als Axiallager, als Kombination der beiden Lagerarten oder als mehrere getrennt voneinander angeordnete Lager ausgebildet sein. Das Hauptlager ist insbesondere dazu geeignet und/oder eingerichtet, die Drehung des Hauptträgers 6 um die Hauptdrehachse 7 gegenüber den ortsfesten Komponenten, insbesondere gegenüber dem Fundament zu lagern.

Die erfindungsgemäße Vorrichtung umfasst einen Hauptträger 6, der, wie in dieser Ausführungsform dargestellt ist, eine wannen- oder U-förmige Form aufweist. Gegebenenfalls kann in allen Ausführungsformen der Träger jedoch auch andersförmig ausgeführt sein. In bevorzugter Weise weist der Hauptträger 6 jedoch ein U-förmiges Profil entlang des Verfahrweges des Schlittens auf. In diesem U-förmigen Profil ist bevorzugt der Schlitten 5 gelagert und/oder geführt.

Bevorzugt weist die erfindungsgemäße Vorrichtung einen Schlitten 5 auf. Dieser Schlitten 5 ist entlang eines Fahrweges 10 entlang des Hauptträgers 6 bewegbar und antreibbar bewegbar angeordnet. In bevorzugter Weise ist der Schlitten 5 entlang des Hauptträgers 6 oder am Hauptträger 6 geführt. Bei U-förmiger Ausgestaltung des Hauptträgers 6 kann eine Führung des Schlittens 5 im unteren Bereich, d.h. im Bodenbereich des U-förmigen Trägers erfolgen. Zusätzlich kann bei U-förmiger Ausgestaltung des Trägers auch eine Führung im Mittenbereich oder an den Schenkelenden des U-förmigen Profils erfolgen. Durch die U-förmige Ausgestaltung und die Mehrpunktführung kann die Stabilität des Gesamtsystems verbessert sein.

Der Schlitten kann gegenüber dem Hauptträger 6 verfahren werden. Dadurch weist der Schlitten zwei Freiheitsgrade auf. Ein Freiheitsgrad ist durch die Drehbarkeit des Hauptträgers 6 um die Hauptdrehachse gegeben. Ein weiterer Freiheitsgrad ist durch die Verschiebbarkeit des Schlittens 5 entlang des Hauptträgers 6 gegeben. Am Schlitten 5 ist eine Bewegungsvorrichtung 4 vorgesehen. Die Bewegungsvorrichtung 4 kann bevorzugt gemeinsam mit dem Schlitten verfahren werden und weist somit zumindest dieselben Freiheitsgrade auf, wie der Schlitten. Die Bewegungsvorrichtung 4 ist dazu geeignet und/oder eingerichtet, eine Haltevorrichtung 2 zu bewegen.

Diese Haltevorrichtung 2 ist insbesondere dazu eingerichtet, eine Person 1 im Bereich eines Zentrums 3 zu fixieren oder zu halten. Die Haltevorrichtung 2 ist bevorzugt mit einem ersten Trägerelement 15 verbunden. In der vorliegenden Ausführungsform ist eine Kabine 23 vorgesehen. Diese Kabine 23 umgibt bevorzugt die Person 1, die Haltevorrichtung 2 und das Zentrum 3. In der vorliegenden Ausführungsform umgibt die Kabine 23 auch das erste Trägerelement 15, womit die angeführten Komponenten in der vorliegenden Darstellung verdeckt und darum strichliert dargestellt sind. Die Haltevorrichtung 2 ist bevorzugt starr oder fixierbar mit dem ersten Trägerelement 15 verbunden. Das erste Trägerelement 15 ist um eine erste Nebenachse 16 drehbar gegenüber dem Schlitten 5 angeordnet. Ferner ist ein zweites Trägerelement 17 vorgesehen. Das zweite Trägerelement 17 ist drehbar um eine zweite Nebenachse 18 gegenüber dem Schlitten angeordnet. Bevorzugt ist das erste Trägerelement 15 drehbar um die erste Nebenachse 16 gegenüber dem zweiten Trägerelement 17 angeordnet. Bevorzugt verläuft die erste Nebenachse 16 durch das Zentrum 3.

Ferner ist bevorzugt ein drittes Trägerelement vorgesehen. Das dritte Trägerelement 19 ist um eine dritte Nebenachse 20 drehbar gegenüber dem Schlitten angeordnet. Die dritte Nebenachse 20 verläuft in der vorliegenden Darstellung projizierend. Bevorzugt ist das zweite Trägerelement 17 um die zweite Nebenachse 18 drehbar gegenüber dem dritten Trägerelement 19 vorgesehen.

Ferner ist gegebenenfalls eine Hubvorrichtung 21 vorgesehen. Die Hubvorrichtung 21 erlaubt eine Hub- und/oder Senkbewegung der Haltevorrichtung 2 gegenüber dem Schlitten 5. Die Hubrichtung verläuft bevorzugt parallel zur Hauptdrehachse. Das dritte Trägerelement 19 ist bevorzugt um eine dritte Nebenachse 20 gegenüber der Hubvorrichtung 21 angeordnet. Ferner ist das dritte Trägerelement 19 bevorzugt über die Hubvorrichtung 21 linear bewegbar gegenüber dem Schlitten angeordnet.

Gegebenenfalls sind lediglich ein erstes Trägerelement und ein zweites Trägerelement vorgesehen, wobei das erste Trägerelement drehbar gegenüber dem zweiten Trägerelement angeordnet ist. Gegebenenfalls ist in dieser Ausführungsform das zweite Trägerelement über eine Hubvorrichtung 21 mit dem Schlitten gekoppelt.

In der vorliegenden Ausführungsform der Fig. 1 weist die Haltevorrichtung 2 für die Person 1 somit sechs Freiheitsgrade, insbesondere vier Drehfreiheitsgrade und zwei translatorische Freiheitsgrade auf. Drei Drehfreiheitsgrade sind durch die Drehung um die Nebenachsen 16, 18 und 20 gegeben. Ein weiterer Drehfreiheitsgrad ist durch die Drehbarkeit des Hauptträgers 6 um die Hauptdrehachse 7 gegeben. Ein translatorischer Freiheitsgrad ergibt sich durch die Verschiebbarkeit des Schlittens 5 entlang des Hauptträgers 6. Ein weiterer translatorischer Freiheitsgrad ergibt sich durch die Hubvorrichtung 21.

Gegebenenfalls sind weniger oder mehr Freiheitsgrade vorgesehen.

Fig. 2 zeigt die gleiche oder eine ähnliche Vorrichtung wie Fig. 1. Der Hauptträger 6 ist drehbar um eine Hauptdrehachse 7 angeordnet. Die Hauptdrehachse verläuft in bevorzugter Weise vertikal. Ferner ist bevorzugt ein Fundament 37 vorgesehen, in dem beispielsweise Antriebe oder Lagerungen zur Bewegung der erfindungsgemäßen Vorrichtung angeordnet sein können oder sind. Details des Antriebs sind in Fig. 2 ausgeblendet. Entlang des Hauptträgers 6 ist der Schlitten 5 verfahrbar angeordnet. Der Hauptträger 6 umfasst bevorzugt einen ersten Hauptarm 8 und einen zweiten Hauptarm 9. Die Hauptarme 8, 9 erstrecken sich bevorzugt im Wesentlichen radial von der Hauptdrehachse 7 nach außen. In bevorzugter Weise sind die beiden Hauptarme 8, 9 linear aneinander gereiht, sodass sich ein linearer Fahrweg 10 des Schlittens 5 am Hauptträger 6 ergibt. Gegebenenfalls ist in allen Ausführungsformen der Fahrweg 10 jedoch leicht gekrümmt oder teilweise gekrümmt ausgebildet. Bevorzugt ist der Fahrweg 10 in allen Ausführungsformen linear entlang des Trägers angeordnet. Durch Verfahren des Schlittens 5 entlang des Fahrwegs 10 kann das Zentrum 3 von einer ersten äußeren Maximalstellung 11 bis zu einer zweiten äußeren Maximalstellung 12 verfahren werden. Somit erstreckt sich der Fahrweg 10 von der ersten äußeren Maximalstellung 11 des Zentrums bis zur zweiten äußeren Maximalstellung 12 des Zentrums 3 und ist insbesondere in allen Ausführungsformen von den beiden Maximalstellungen begrenzt. In der ersten äußeren Maximalstellung 11 befindet sich der Schlitten bevorzugt am ersten Hauptarm 8 und insbesondere im Außenbereich des ersten Hauptarms 8. In der zweiten äußeren Maximalstellung des Zentrums 3 befindet sich der Schlitten am zweiten Hauptarm 9 und insbesondere im Außenbereich des zweiten Hauptarms 9. Diese alternative Stellung ist in der vorliegenden Darstellung strichliert eingezeichnet. Erfindungsgemäß ist vorgesehen, dass der erste Normalabstand 13 des Zentrums 3 in der ersten äußeren Maximalstellung 11 von der Hauptdrehachse 7 größer ist, als der zweite Normalabstand 14 zwischen der Hauptdrehachse 7 und dem Zentrum 3 in der zweiten äußeren Maximalstellung 12.

Gegebenenfalls ist das Abmaß 47 des ersten Hauptarms 8 größer als das Abmaß 48 des zweiten Hauptarms 9.

Bei konstanter Winkelgeschwindigkeit des Hauptarms kann die auf die Person 1 wirkende Radialbeschleunigung dadurch verändert werden, dass das Zentrum 3 entlang des Fahrwegs nach außen geschoben wird. Da der maximale Radius des Zentrums 3 am ersten Hauptarm 8 größer ist als am zweiten Hauptarm 9, kann durch Verschieben des Schlittens 5 entlang des ersten Hauptarms 8 bei konstanter Winkelgeschwindigkeit eine höhere Radialbeschleunigung bewirkt werden, als am zweiten Hauptarm 9. In allen Ausführungsformen kann der Schlitten 5 in jede beliebige Zwischenstellung zwischen den beiden Maximalstellungen 11, 12 bewegt werden.

Die Vorrichtung gemäß Fig. 2 kann insbesondere gleich ausgeführt sein wie die Vorrichtung gemäß Fig. 1. Insbesondere können auch die Freiheitsgrade der Haltevorrichtung 2 gegenüber der Umgebung gleich ausgebildet sein wie bei der Beschreibung der Fig. 1. Insbesondere ergeben sich auch bei der Ausführungsform gemäß Fig. 2 bevorzugt sechs Freiheitsgrade. Gegebenenfalls weist die Haltevorrichtung 2 bzw. die Person 1 jedoch auch weniger oder mehr Freiheitsgrade gegenüber der Umgebung auf.

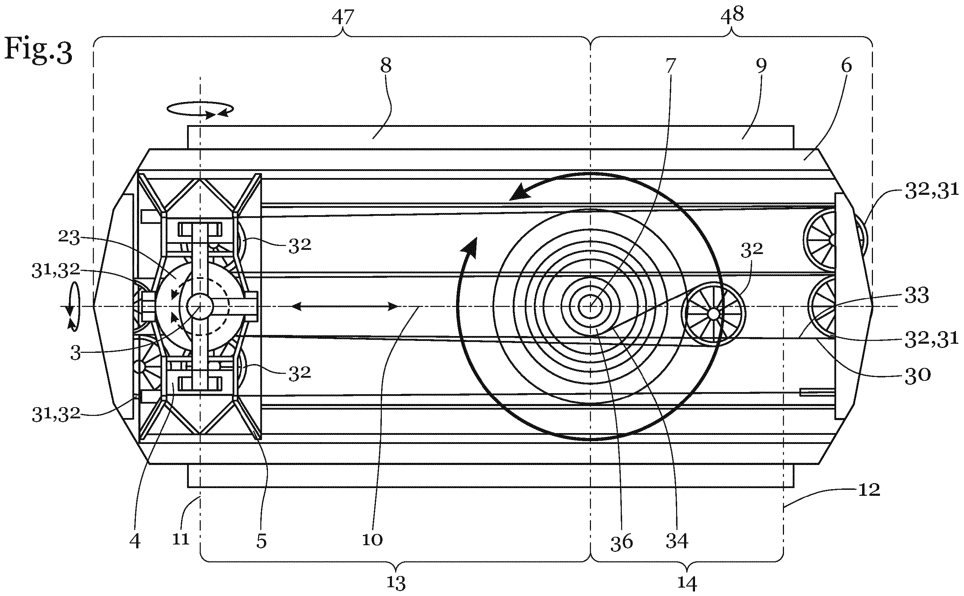

Fig. 3 zeigt eine Ausführungsform einer erfindungsgemäßen Vorrichtung bzw. eines erfindungsgemäßen Systems von oben. Die Vorrichtung umfasst einen Hauptträger 6. Dieser Hauptträger 6 ist drehbar um eine Hauptdrehachse 7 gelagert und bevorzugt angetrieben oder antreibbar. Die Hauptdrehachse 7 verläuft in der vorliegenden Ansicht projizierend.

Der Hauptträger weist bevorzugt einen ersten Hauptarm 8 und einen zweiten Hauptarm 9 auf. Die beiden Hauptarme 8 und 9 kragen beidseitig der Hauptdrehachse 7 aus oder verlaufen von dieser Hauptdrehachse 7 weg. Bevorzugt ist der Hauptträger 6 derart ausgebildet, dass der erste Hauptarm 8 und der zweite Hauptarm 9 geradlinig aneinander gereiht sind. Auf dem Hauptträger 6 ist ein Schlitten 5 angeordnet. Der Schlitten 5 ist entlang eines Fahrweges 10 entlang des Hauptträgers 6 verfahrbar. Insbesondere erstreckt sich der Fahrweg 10 entlang des Hauptträgers 6 vom ersten Hauptarm 8 über die Hauptdrehachse 7 hinweg auf den zweiten Hauptarm 9. Somit kann der Schlitten 5 vom ersten Hauptarm 8 auf den zweiten Hauptarm 9 verfahren werden. Bevorzugt kann in allen Ausführungsformen der Schlitten 5 vom Bereich der Hauptdrehachse 7 beidseitig verfahren werden. Am Schlitten 5 ist eine Bewegungsvorrichtung 4 vorgesehen. Die Bewegungsvorrichtung 4 kann insbesondere den Bewegungsvorrichtungen der anderen Ausführungsformen entsprechen. Über die Bewegungsvorrichtung 4 ist eine Haltevorrichtung 2 für eine Person 1, wobei beide Elemente 2, 1 in der vorliegenden Darstellung nicht zu sehen sind, drehbar bzw. bewegbar gegenüber dem Schlitten 5 und gegenüber der Umwelt angeordnet. Insbesondere umfasst die Bewegungsvorrichtung 4 ein erstes Trägerelement 15, ein zweites Trägerelement 17 und gegebenenfalls ein drittes Trägerelement 19. Diese drei Trägerelemente 15, 17, 19 können gegebenenfalls über Nebenachsen 16, 18, 20 gedreht werden. Ferner ist bevorzugt eine Hubvorrichtung 21 vorgesehen. Über die Hubvorrichtung 21 kann die Haltevorrichtung 2 bzw. die Person 1 gegenüber dem Hauptträger 6 translatorisch bewegt werden. Insbesondere ist die Bewegungsrichtung der Hubvorrichtung 21 parallel zur Hauptdrehachse 7 angeordnet.

Bevorzugt ist eine Kabine 23 vorgesehen. In der Kabine 23 ist die Haltevorrichtung 2 vorgesehen. Die Haltevorrichtung 2 ist dazu geeignet und/oder eingerichtet, eine Person 1 im Bereich des Zentrums 3 zu positionieren oder halten. Das Zentrum 3 kann durch Betätigung des Schlittens 5 entlang des Fahrwegs 10 verfahren werden. Insbesondere kann das Zentrum 3 von einer ersten äußeren Maximalstellung 11 bis zu einer zweiten äußeren Maximalstellung 12 verfahren werden. Der erste Normalabstand 13 des Zentrums von der Hauptdrehachse 7 ist dabei bevorzugt größer als der zweite Normalabstand 14 der zweiten äußeren Maximalstellung 12 von der Hauptdrehachse 7. Dadurch kann das Zentrum entlang des ersten Hauptarms 8 weiter nach außen verfahren werden als entlang des zweiten Hauptarms 9. Gegebenenfalls ist der gesamte Hauptträger 6 asymmetrisch angeordnet. In einer derartigen Ausgestaltung ist das Abmaß 47 des ersten Hauptarms 8 größer als das Abmaß 48 des zweiten Hauptarms 9. Die Abmaße 47, 48 reichen jeweils im Wesentlichen normal von der Hauptdrehachse 7 bis zum äußeren Ende des ersten bzw. des zweiten Hauptarms bzw. des Hauptträgers.

In der vorliegenden Darstellung der Fig. 3 ist zum Verfahren des Schlittens 5 eine Schlittenantriebsvorrichtung 30 vorgesehen. Die Schlittenantriebsvorrichtung 30 ist in dieser Ausführungsform als Seilantrieb ausgebildet. Dabei ist ein Seil 33 um mehrere Umlenkrollen 32 umgelenkt. Ferner ist das Seil 33 um eine Seilantriebsrolle 34 umgelenkt. Durch Verdrehung der Seilantriebsrolle 34 kann das Seil bzw. Teile des Seils bewegt werden, um auch den Schlitten 5 am Hauptträger 6 zu verfahren. Dazu ist ein Antrieb 36 vorgesehen. Dieser Antrieb 36 ist bevorzugt ortsfest angeordnet. Gegebenenfalls kann dieser Antrieb 36 oder Teile des Antriebs 36 jedoch auch am Hauptträger vorgesehen sein. Gegebenenfalls ist eine Umlenkrolle 32 als Spannrolle ausgebildet. Diese Spannrolle ist dazu eingerichtet, das Seil in jeder Betriebsstellung auf Zug zu halten. Die Spannrolle ist in der vorliegenden Ansicht jene Rolle, die am Nächsten zur Seilantriebsrolle 34 angeordnet ist. Ferner umfasst der Seilantrieb der folgenden Ausführungsform mehrere Hauptträgerumlenkrollen 31. Die Hauptträgerumlenkrollen 31 sind bevorzugt drehbar am Hauptträger 6 angeordnet. Ferner sind Umlenkrollen 32 drehbar am Schlitten angeordnet.

Das Seil 33 oder die Seile 33 sind um alle eingezeichneten Umlenkrollen umgelenkt. Bevorzugt ist das Seil an einem oder mehreren Abschnitten am Hauptträger 6 festgelegt. Durch Betätigen der Seilantriebsrolle 34, insbesondere durch den Antrieb 36 der Seilantriebsrolle 34, kann durch Änderung der Länge von Seilabschnitten oder Seilschlingen ein Verschieben des Schlittens 5 am Hauptträger bewirkt werden.

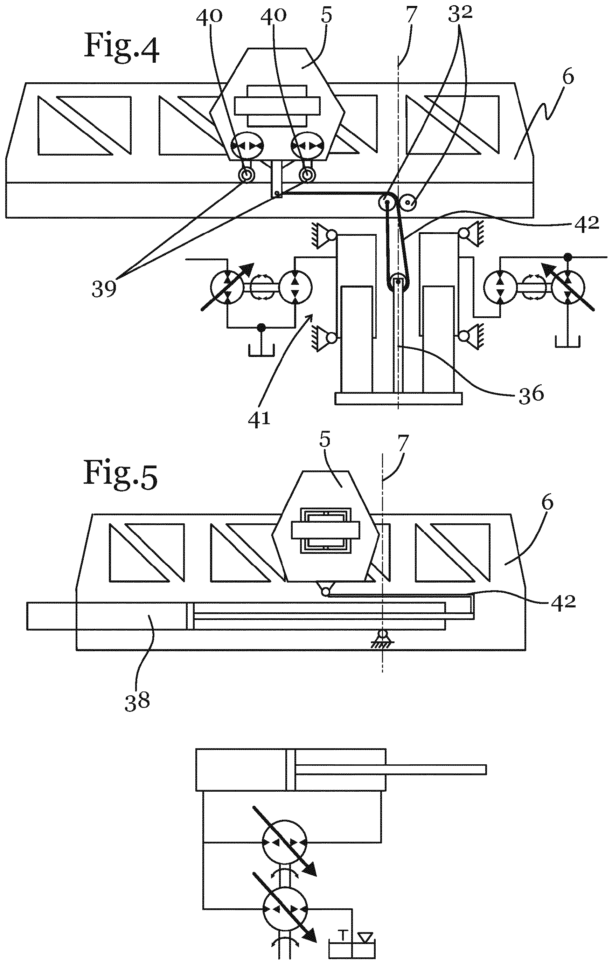

Fig. 4 zeigt eine weitere Ausgestaltung einer erfindungsgemäßen Vorrichtung. Im Gegensatz zur Darstellung der Fig. 3 umfasst die Schlittenantriebsvorrichtung 30 zum Verfahren des Schlittens 5 am Hauptträger 6 einen oder mehrere Antriebsräder 39, die an einem Element des Hauptträgers 6 abrollen. Gegebenenfalls entsprechen alle weiteren Komponenten den Komponenten aus Fig. 1, Fig. 2. oder Fig.3. Bevorzugt umfassen die Antriebsräder 39 einen oder mehrere Antriebe 40. Die Antriebe 40 sind dazu eingerichtet und/oder geeignet, das Antriebsrad 39 oder die Antriebsräder 39 anzutreiben, und somit eine Verschiebung des Schlittens 5 am Hauptträger 6 zu bewirken. Gegebenenfalls sind die Antriebe 40 am Schlitten angeordnet bzw. mit dem Schlitten mitbewegbar angeordnet.

Bei hohen Radialbeschleunigungen kann es notwendig sein, dass zur Stützung der Verschiebung des Schlittens durch die Antriebsräder 39 ein weiterer Antrieb vorgesehen ist. Dieser weitere Antrieb ist gemäß der vorliegenden Ausführungsform als Radiallastkompensationsantrieb 41 ausgebildet. Der Radiallastkompensationsantrieb 41 umfasst bevorzugt ein Zugelement 42, das mit dem Schlitten 5 verbunden ist oder das am Schlitten 5 angreift. Das Zugelement 42 ist von einem Antrieb 36 angetrieben. Gegebenenfalls ist das Zugelement 42 in Form eines Flaschenzugs angeordnet. Gegebenenfalls umfasst der Radiallastkompensationsantrieb 41 einen Flaschenzug. Bevorzugt ist das Zugelement 42 als flexibles Zugelement wie insbesondere als Seil ausgebildet. Das Zugelement 42 ist bevorzugt im Bereich der Hauptdrehachse 7 in den Hauptträger 6 geführt. Ferner sind im Bereich der Durchführung des Zugelements 42 in den Hauptträger 6 Umlenkrollen 32 vorgesehen. Die Umlenkrollen 32 lenken das Zugelement von dem bevorzugt ortsfest angeordneten Antrieb um, sodass ein Abschnitt des Zugelements 42 am Schlitten 5 angreifen kann. Dadurch umfasst das Zugelement 42 einen Abschnitt, der zwischen Schlitten und Umlenkrolle 32 vorgesehen ist. Dieser Abschnitt verläuft im Wesentlichen schräg oder bevorzugt waagrecht. Zwischen dem Antrieb des Zugelements 42 und der Umlenkrolle 32 ist ein zweiter Abschnitt des Zugelements 42 vorgesehen. Dieser verläuft im Wesentlichen schräg oder bevorzugt senkrecht.

Durch die Konfiguration des Direktantriebs über ein oder mehrere Antriebsräder 39 und den Radiallastkompensationsantrieb 41 erfolgt eine kräftemäßige Aufteilung zwischen "Halten" des Schlittens gegen die Radialbeschleunigungskräfte durch den Radiallastkompensationsantrieb 41 und "Bewegen" des Schlittens am Hauptträger 6 durch angetriebene Antriebsräder 39.

Fig. 5 zeigt eine weitere Ausführungsform einer möglichen Schlittenantriebsvorrichtung 30 und einen schematischen Hydraulikschaltplan dieser Ausführungsform. Die Schlittenantriebsvorrichtung 30 der Ausführungsform gemäß Fig. 5 umfasst einen hydraulischen Zylinder 38, der gegebenenfalls als herkömmlicher, ausreichend dimensionierter hydraulischer Zylinder 38 ausgebildet sein kann. Gegebenenfalls entsprechen alle weiteren Komponenten den Komponenten aus Fig. 1, Fig. 2. oder Fig.3. Der hydraulische Zylinder 38 ist am Hauptträger 6 vorgesehen und ist insbesondere um die Hauptdrehachse 7 mitgedreht. Über Längenänderungen des hydraulischen Zylinders 38 kann ein Zugelement 42 bewegt werden. Dieses Zugelement 42 greift am Schlitten 5 an, um den Schlitten entlang des Hauptträgers 6 zu bewegen. Gegebenenfalls ist das Zugelement 42 als Druckelement ausgebildet. Gegebenenfalls kann das Zugelement eine Stange sein, die als Zug- und Druckelement ausgebildet ist. Gegebenenfalls ist das Zugelement 42 seilförmig ausgebildet. Gegebenenfalls sind mehrere hydraulische Zylinder 38 vorgesehen, die gegeneinander wirken und dadurch eine Verschiebbarkeit des Schlittens am Hauptträger verbessern. Gegebenenfalls ist jedoch nur ein einziger hydraulischer Zylinder 38 vorgesehen, der den Schlitten entlang des ersten Hauptarms und des zweiten Hauptarms und insbesondere von der ersten Maximalstellung des Zentrums bis zur zweiten Maximalstellung des Zentrums verfahren kann.

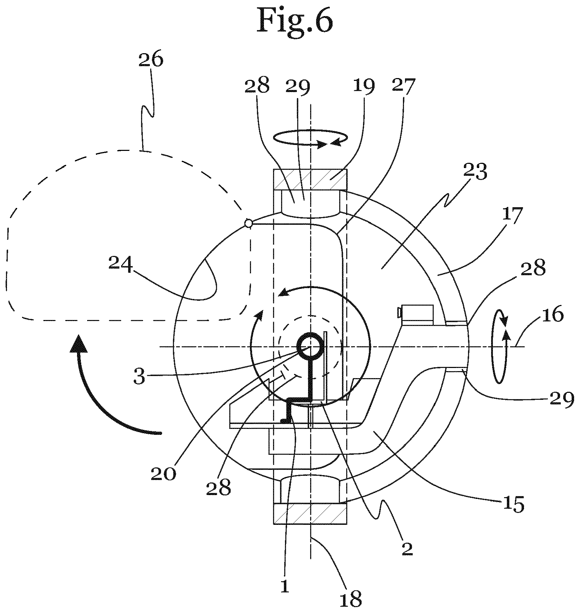

Fig. 6 zeigt ein weiteres Detail einer Ausgestaltung der erfindungsgemäßen Vorrichtung in einer schematischen Ansicht. Gegebenenfalls sind die Bewegungsvorrichtung 4 und die Kabine 23 in allen Ausführungsformen gemäß Fig. 6 ausgebildet. In der vorliegenden Ausführungsform umfasst die Kabine 23 eine Kabinentüre 26. Die Kabinentüre 26 ist öffenbar bzw. verschließbar ausgebildet. Die Kabinentüre verschließt gegebenenfalls eine Kabinenöffnung 27. Bevorzugt ist die Kabinentüre 26 derart ausgebildet, sodass sie die Form der Kabine 23 vervollständigt. Beispielsweise kann die Kabine eine kugelförmige Form oder eine kugelförmige Innenfläche haben. Insbesondere ist an der Innenseite der Kabine eine Bildwiedergabefläche 24 vorgesehen. Die Bildwiedergabefläche erstreckt sich bevorzugt über das gesamte Sichtfeld oder das gesamte Blickfeld der Person 1. Gegebenenfalls ist ein Projektor oder mehrere Projektoren vorgesehen, über die Bilder insbesondere künstlich von einem Computer erzeugte bewegte Bilder der Simulationsumgebung auf die Bildwiedergabefläche 24 projiziert werden können.

Die Person 1 ist an einer Haltevorrichtung 2 gehalten. Die Haltevorrichtung ist beispielsweise als Sitz oder als Liege ausgebildet. Bevorzugt umfasst die Haltevorrichtung Gurte, sodass die Person fest an der Haltevorrichtung 2 gehalten ist. Die Haltevorrichtung ist insbesondere dazu eingerichtet, die Person 1 im Bereich eines Zentrums 3 zu positionieren. Bevorzugt ist in allen Ausführungsformen der Kopf der Person im Zentrum positioniert. Gegebenenfalls ist in allen Ausführungsformen die Brust oder das Herz der Person im Zentrum 3 positioniert. Die Haltevorrichtung 2 weist bevorzugt einen feststellbaren Freiheitsgrad gegenüber dem ersten Trägerelement 15 auf. Dieser Freiheitsgrad ist beispielsweise durch eine Sitzverstellung gegeben. Insbesondere kann es gegebenenfalls notwendig sein, eine Verstellbarkeit der Haltevorrichtung gegenüber dem ersten Trägerelement 15 vorzusehen, um die Positionierbarkeit der Person 1 zum Zentrum zu ermöglichen. Die Haltevorrichtung kann zusammen mit dem ersten Trägerelement um eine erste Nebenachse 16 gedreht werden. Insbesondere geschieht diese Drehung des ersten Trägerelements um die Drehachse 16 gegenüber dem zweiten Trägerelement 17. Das erste Trägerelement 15 ist in der vorliegenden Ausführung als Kragträger oder als geschwungener auskragender Träger ausgebildet. Im hinteren Bereich, insbesondere hinter der Person 1, ist das erste Trägerelement 15 zum zweiten Trägerelement 17 geführt und im oder an diesem drehbar gelagert. Darüber hinaus ist der Drehantrieb 29 zur Verdrehung des ersten Trägerelements gegenüber dem zweiten Trägerelement vorgesehen. Das zweite Trägerelement 17 ist in der vorliegenden Form im Wesentlichen C-förmig ausgebildet. Gegebenenfalls ist das zweite Trägerelement ein Teil der Kabine 23. Gegebenenfalls hat die Kabine 23 eine aussteifende Wirkung für das zweite Trägerelement 17. Gegebenenfalls weist das zweite Trägerelement 17 eine Ausnehmung 28 auf. In dieser Ausnehmung 28 kann der Drehantrieb 29 und gegebenenfalls die Lagerung für die Drehung des ersten Trägerelements gegenüber dem zweiten Trägerelement erfolgen. Das zweite Trägerelement 17 ist drehbar gegenüber einem dritten Trägerelement 19 angeordnet. Insbesondere geschieht die Drehung um eine zweite Nebenachse 18. Das dritte Trägerelement 19 ist beispielsweise ringförmig ausgebildet und erstreckt sich gegebenenfalls rund um die Kabine 23 herum. In der vorliegenden Darstellung sind von dem Ring hauptsächlich die Schnittflächen zu sehen.

Das dritte Trägerelement 19 ist bevorzugt um eine dritte Nebenachse 20 drehbar gegenüber dem Schlitten angeordnet. Die dritte Nebenachse 20 verläuft in dieser Darstellung projizierend. Zur Verdrehung des zweiten Trägerelements 17 bzw. des dritten Trägerelements 19 sind im dritten Trägerelement 19 mehrere, zumindest zwei Drehantriebe 29 vorgesehen. Die Drehantriebe 29 können insbesondere in Ausnehmungen 28 des dritten Trägerelements vorgesehen sein. Bevorzugt weisen die drei Nebenachsen 16, 18, 20 ihren geringsten Normalabstand zueinander im Bereich des Zentrums 3 auf. Bevorzugt schneiden die drei Nebenachsen 16, 18, 20 einander im Zentrum 3. In der vorliegenden Ausführungsform entspricht die erste Nebenachse der Rollachse der Person 1. Die Person 1 und insbesondere die Haltevorrichtung weisen gegenüber der Kabine 23 und insbesondere gegenüber der Bildwiedergabefläche 24 gegebenenfalls einen Drehfreiheitsgrad auf, der bevorzugt ein Rolldrehfreiheitsgrad ist.

Bevorzugt entspricht bei der vorliegenden Konfiguration die zweite Nebenachse 18 der Gierachse. Bevorzugt entspricht die dritte Nebenachse 20 der Nickachse. Durch Verdrehung der Person, beispielsweise um 90°um die erste Nebenachse, wechseln jedoch die zweite Nebenachse und die dritte Nebenachse ihre Orientierung gegenüber der Person, sodass die zweite Nebenachse der Nickachse und die dritte Nebenachse der Gierachse entsprechen.

### Bezugszeichenliste

- 1: Person
- 2: Haltevorrichtung
- 3: Zentrum
- 4: Bewegungsvorrichtung
- 5: Schlitten
- 6: Hauptträger
- 7: Hauptdrehachse
- 8: Erster Hauptarm
- 9: Zweiter Hauptarm
- 10: Fahrweg
- 11: Erste äußere Maximalstellung
- 12: Zweite äußere Maximalstellung
- 13: Erster Normalabstand
- 14: Zweiter Normalabstand
- 15: Erstes Trägerelement
- 16: Erste Nebenachse
- 17: Zweites Trägerelement
- 18: Zweite Nebenachse
- 19: Drittes Trägerelement
- 20: Dritte Nebenachse
- 21: Hubvorrichtung
- 22: Linearantrieb
- 23: Kabine
- 24: Bildwiedergabefläche
- 25: Bedienelement
- 26: Kabinentüre
- 27: Verschließbare Kabinenöffnung
- 28: Ausnehmungen
- 29: Drehantrieb
- 30: Schlittenantriebsvorrichtung
- 31: Hauptträgerumlenkrolle
- 32: Umlenkrolle
- 33: Seil
- 34: Seilantriebsrolle
- 35: Hauptantrieb
- 36: Antrieb der Seilantriebsrolle
- 37: Fundament
- 38: Hydraulischer Zylinder
- 39: Antriebsrad
- 40: Antrieb des Antriebsrades
- 41: Radiallastkompensationsantrieb
- 42: Zugelement
- 43: Hauptträgerantrieb
- 44: Zahnkranz
- 45: Reibring
- 46: Hauptlager
- 47: Abmaß des ersten Hauptarms
- 48: Abmaß des zweiten Hauptarms

## Patentansprüche

1. Vorrichtung, insbesondere Flugsimulator, Bewegungssimulator oder Orientierungssimulator, zur räumlichen Bewegung von zumindest einer Person (1) und insbesondere zur Simulation von Beschleunigungsabfolgen, wobei eine Haltevorrichtung (2) zur Halterung einer Person (1) im Bereich eines Zentrums (3) vorgesehen ist,
- wobei die Haltevorrichtung (2) über eine Bewegungsvorrichtung (4) an einem Schlitten (5) angebracht ist,
- wobei der Schlitten (5) entlang eines horizontal verlaufenden Hauptträgers (6) verfahrbar ist und insbesondere linear verfahrbar ist,
- wobei der Hauptträger (6) drehbar um eine vertikal verlaufende Hauptdrehachse (7) gelagert, antreibbar und gegebenenfalls von einem Hauptantrieb (35) angetrieben ist,
- wobei der Hauptträger (6) einen ersten Hauptarm (8) und einen zweiten Hauptarm (9) aufweist,
- wobei sich die beiden Hauptarme (8, 9) in entgegengesetzte Richtungen radial von der Hauptdrehachse (7) nach außen erstrecken,
- wobei das Zentrum (3) durch Verfahren des Schlittens (5) entlang eines Fahrweges (10) am Hauptträger (6) zwischen einer ersten äußeren Maximalstellung (11) und einer zweiten äußeren Maximalstellung (12) verfahrbar ist,
- wobei in der ersten äußeren Maximalstellung (11) des Zentrums (3) der Schlitten (5) am ersten Hauptarm (8) angeordnet ist,
- und wobei in der zweiten äußeren Maximalstellung (12) des Zentrums (3) der Schlitten (5) am zweiten Hauptarm (9) angeordnet ist,
**dadurch gekennzeichnet, dass**
der Normalabstand (13) zwischen der ersten äußeren Maximalstellung (11) des Zentrums (3) und der Hauptdrehachse (7) größer ist, als der Normalabstand (14) zwischen der zweiten äußeren Maximalstellung (12) des Zentrums (3) und der Hauptdrehachse (7).

2. Vorrichtung nach Anspruch 1, **dadurch gekennzeichnet, dass** der Fahrweg (10) des Zentrums (3) entlang des Hauptträgers (6) durch die erste äußere Maximalstellung (11) und die zweite äußere Maximalstellung (12) begrenzt ist.

3. Vorrichtung nach Anspruch 1 oder 2, **dadurch gekennzeichnet, dass** der erste Hauptarm (8), normal zur Hauptdrehachse (7) gemessen, länger ist, als der zweite Hauptarm (9) oder dass die Hauptdrehachse (7) relativ zum Hauptträger (6) entlang der Längserstreckung des Hauptträgers (6) asymmetrisch angeordnet ist.

4. Vorrichtung nach einem der Ansprüche 1 bis 3, **dadurch gekennzeichnet, dass** der Hauptträger (6) entlang des Fahrweges (10) ein wannenförmiges oder U-förmiges Profil aufweist, und dass der Schlitten (5) am oder im Hauptträger (6) geführt ist und zumindest teilweise vom Hauptträger (6) umgriffen ist.

5. Vorrichtung nach einem der Ansprüche 1 bis 4, **dadurch gekennzeichnet,**
**dass** die Bewegungsvorrichtung (4) ein erstes Trägerelement (15) umfasst, das starr mit der Haltevorrichtung (2) verbunden oder verbindbar angeordnet ist,
**dass** das erste Trägerelement (15) um eine erste Nebenachse (16) drehbar gegenüber dem Schlitten (5) antreibbar oder angetrieben ist, dass die erste Nebenachse (16) durch das Zentrum verläuft,
**dass** die Bewegungsvorrichtung (4) ein zweites Trägerelement (17) umfasst,
**dass** das erste Trägerelement (15) um die erste Nebenachse (16) drehbar gegenüber dem zweiten Trägerelement (17) antreibbar oder angetrieben ist, und dass das zweite Trägerelement (17) um eine zweite Nebenachse (18) drehbar gegenüber dem Schlitten (5) antreibbar oder angetrieben ist, dass die erste Nebenachse (16) und die zweite Nebenachse (18) im Wesentlichen orthogonal zueinander verlaufen und dass die erste Nebenachse (16) und die zweite Nebenachse (18) im Zentrum (3) den geringsten Normalabstand zueinander aufweisen oder sich im Zentrum (3) schneiden.

6. Vorrichtung nach einem der Ansprüche 1 bis 4, **dadurch gekennzeichnet,**
**dass** die Bewegungsvorrichtung (4) ein erstes Trägerelement (15) umfasst, das starr mit der Haltevorrichtung (2) verbunden oder verbindbar angeordnet ist, dass das erste Trägerelement (15) um eine erste Nebenachse (16) drehbar gegenüber dem Schlitten (5) antreibbar oder angetrieben ist, dass die erste Nebenachse (16) durch das Zentrum (3) verläuft,
**dass** die Bewegungsvorrichtung (4) ein zweites Trägerelement (17) umfasst, dass das erste Trägerelement (15) um die erste Nebenachse (16) drehbar gegenüber dem zweiten Trägerelement (17) antreibbar oder angetrieben ist, dass das zweite Trägerelement (17) um eine zweite Nebenachse (18) drehbar gegenüber dem Schlitten (5) antreibbar oder angetrieben ist, dass die erste Nebenachse (16) und die zweite Nebenachse (18) im Wesentlichen orthogonal zueinander verlaufen,
**dass** die erste Nebenachse (16) und die zweite Nebenachse (18) im Zentrum (3) den geringsten Normalabstand zueinander aufweisen oder sich im Zentrum (3) schneiden,
**dass** die Bewegungsvorrichtung (4) ein drittes Trägerelement (19) umfasst, dass das zweite Trägerelement (17) um die zweite Nebenachse (18) drehbar gegenüber dem dritten Trägerelement (19) antreibbar oder angetrieben ist, dass das dritte Trägerelement (19) um eine dritte Nebenachse (20) drehbar gegenüber dem Schlitten (5) antreibbar oder angetrieben ist, dass die zweite Nebenachse (18) und die dritte Nebenachse (20) im Wesentlichen orthogonal zueinander verlaufen und dass die zweite Nebenachse (18) und die dritte Nebenachse (20) im Zentrum (3) den geringsten Normalabstand zueinander aufweisen oder sich im Zentrum (3) schneiden.

7. Vorrichtung nach einem der Ansprüche 1 bis 6, **dadurch gekennzeichnet, dass** die Bewegungsvorrichtung (4) eine Hubvorrichtung (21) zur translatorischen und insbesondere zur linearen Bewegung der Haltevorrichtung (2), der Haltevorrichtung, des ersten Trägerelements (15), des zweiten Trägerelements (17) und/oder gegebenenfalls des dritten Trägerelements (19) umfasst,
dass die Bewegungsrichtung der Hubvorrichtung (21) im Wesentlichen parallel zur Hauptdrehachse (7) und/oder normal zum Fahrweg (10) verläuft und dass die Hubvorrichtung (21) einen oder mehrere Linearantriebe (22) wie insbesondere einen elektrischen oder hydraulischen Linearantrieb oder eine Parallelkinematikanordnung umfasst.

8. Vorrichtung nach einem der Ansprüche 1 bis 7, **dadurch gekennzeichnet, dass** die Haltevorrichtung (2) in einer Kabine (23) angeordnet ist, und dass in der Kabine (23) eine Bildwiedergabefläche (24) zur bildlichen Darstellung einer Simulationsumgebung vorgesehen ist,
dass in der Kabine (23) eine Nachbildung eines zu simulierenden Objektes vorgesehen ist, wobei die Nachbildung des zu simulierenden Objektes insbesondere die Nachbildung eines Flugzeugcockpits, eines Fahrzeugcockpits, eines Hubschraubercockpits oder eines Schiffscockpits ist und dass im Bereich der Haltevorrichtung (2) gegebenenfalls Bedienelemente (25) vorgesehen sind, dass die Bedienelemente (25) mit einer Steuerungseinrichtung verbunden sind, dass über die Bedienelemente die Bewegung der Vorrichtung und insbesondere die Simulation beeinflussbar ist, sodass die in der Kabine (23) befindliche Person (1) das simulierte Objekt oder die Bewegung der Vorrichtung steuern kann.

9. Vorrichtung nach Anspruch 8, **dadurch gekennzeichnet, dass** die Bildwiedergabefläche (24) und/oder die Kabine (23) am zweiten Trägerelement (17) oder gegebenenfalls am dritten Trägerelement (19) vorgesehen ist, sodass die Haltevorrichtung (2) zumindest einen antreibbaren Drehfreiheitsgrad gegenüber der Bildwiedergabefläche (24) und/oder der Kabine (23) aufweist.

10. Vorrichtung nach einem der Ansprüche 8 oder 9, **dadurch gekennzeichnet, dass** das zweite Trägerelement (17) ringförmig oder C-förmig ausgebildet ist und starr mit der Kabine (23) verbunden ist, oder dass das zweite Trägerelement (17) einen ringförmigen oder C-förmigen Abschnitt umfasst und die Kabine (23) ein Teil des zweiten Trägerelements (17) ist.

11. Vorrichtung nach einem der Ansprüche 8 bis 10, **dadurch gekennzeichnet, dass** das dritte Trägerelement (19) ringförmig ausgebildet ist und sich rund um die Kabine (23) erstreckt und dass im dritten Trägerelement (19) Ausnehmungen (28) zur Aufnahme von Drehantrieben (29) vorgesehen sind, wobei die im dritten Trägerelement (19) vorgesehenen Drehantriebe (29) zur Drehung des zweiten Trägerelements (17) um die zweite Nebenachse (18) und zur Drehung des dritten Trägerelements (19) um die dritte Nebenachse (20) eingerichtet sind.

12. Vorrichtung nach einem der Ansprüche 6 bis 11, **dadurch gekennzeichnet, dass** die Hubvorrichtung (21) am dritten Trägerelement (19) und insbesondere im Bereich der dritten Nebenachse (20) angreift.

13. Vorrichtung nach einem der Ansprüche 5 bis 12, **dadurch gekennzeichnet, dass** das erste Trägerelement (15) als Kragträger ausgebildet ist, der einseitig insbesondere hinter der Haltevorrichtung (2) mit dem zweiten Trägerelement (17) drehbar verbunden ist, sodass sich das erste Trägerelement (15) hinter und/oder unter der Person (1) von der Haltevorrichtung (2) bis zum zweiten Trägerelement (17) erstreckt.

14. Vorrichtung nach einem der Ansprüche 5 bis 13, **dadurch gekennzeichnet, dass** die erste Nebenachse (16) der Rollachse der Person (1) entspricht.

15. Vorrichtung nach einem der Ansprüche 1 bis 14, **dadurch gekennzeichnet, dass** der Normalabstand (13) des Zentrums (3) von der Hauptdrehachse (7) in der ersten äußeren Maximalstellung (11) zwischen 4 und 8 Meter, zwischen 5 und 7 Meter und/oder etwa 6 Meter beträgt,
dass der Normalabstand (14) des Zentrums (3) von der Hauptdrehachse (7) in der zweiten äußeren Maximalstellung (11) zwischen 0 und 4 Meter, zwischen 0,5 und 4 Meter, zwischen 1 und 3 Meter und/oder etwa 2 Meter beträgt und/oder dass der Normalabstand (13) des Zentrums (3) von der Hauptdrehachse (7) in der ersten äußeren Maximalstellung (11) zumindest 2 Mal, insbesondere zwischen 2 und 4 Mal und/oder insbesondere etwa 3 Mal, 5 Mal, 10 Mal, 20 Mal oder insbesondere 100 Mal größer ist, als der Normalabstand (14) des Zentrums (3) von der Hauptdrehachse (7) in der zweiten äußeren Maximalstellung (11).

## Claims

1. An apparatus, in particular a flight simulator, a motion simulator or an orientation simulator for spatial movement at least one person (1) and in particular for simulating the effects of acceleration, wherein a holding device (2) is provided for holding a person (1) in the area of a center (3),
- wherein the holding device (2) is mounted on a carriage (5) by means of a movement device (4),
- wherein the carriage (5) can be moved along a main horizontal support (6) and in particular can be moved linearly,
- wherein the main support (6) is mounted to be rotatable about a main vertical axis of rotation (7), driveable and is optionally driven by a main drive (35),
- wherein the main support (6) has a first main arm (8) and a second main arm (9),
- wherein the two main arms (8, 9) extend radially outward in opposite directions away from the main axis of rotation (7),
- wherein the center (3) can be moved between a first outer maximum position (11) and a second outer maximum position (12) by moving the carriage (5) along a path of travel (10) on the main support (6),
- wherein the carriage (5) is arranged on the first main arm (8) in the first outer maximum position (11) of the center (3),
- and wherein the carriage (5) is arranged on the second main arm (9) in the second outer maximum position (12) of the center (3),
**characterized in that**
the normal distance (13) between the first outer maximum position (11) of the center (3) and the main axis of rotation (7) is greater than the normal distance (14) between the second outer maximum position (12) of the center (3) and the main axis of rotation (7).

2. The device according to claim 1, **characterized in that** the path of travel (10) of the center (3) along the main support (6) is limited by the first outer maximum position (11) and by the second outer maximum position (12).

3. The device according to claim 1 or 2, **characterized in that** the first main arm (8) is longer, measured orthogonal to the main axis of rotation (7), than the second main arm (9), or that the main axis of rotation (7) is arranged asymmetrically along the longitudinal extent of the main support (6) in relation to the main support (6).

4. The device according to any one of claims 1 to 3, **characterized in that** the main support (6) has a trough-shaped or U-shaped profile along the path of travel (10), and the carriage (5) is guided in or on the main support (6) and is encompassed at least partially by the main support (6).

5. The device according to any one of claims 1 to 4, **characterized in that** the main support (4) comprises a first support element (15), which is arranged to be rigidly connected or connectable to the holding device (2); the first support element (15) is or can be driven to rotate about a first secondary axis (16) with respect to the carriage (5); the first secondary axis (16) passes through the center;
the movement device (4) comprises a second support element (17); the first support element (15) is or can be driven to rotate about the first secondary axis (16) with respect to the second support element (17); and the second support element (17) is or can be driven to rotate about a second secondary axis (18) with respect to the carriage (5); the first secondary axis (16) and the second secondary axis (18) run essentially orthogonally to one another; and the first secondary axis (16) and the second secondary axis (18) have the smallest normal distance to each other in the center (3) or they intersect at the center (3).

6. The device according to any one of claims 1 to 4, **characterized in that** the movement device (4) comprises a first support element (15), which is arranged so that it is or can be rigidly connected to the holding device (2); the first support element (15) is or can be driven to rotate about a first secondary axis (16) with respect to the carriage (5); the first secondary axis (16) passes through the center (3);
the movement device (4) comprises a second support element (17); the first support element (15) is or can be driven to rotate about the first secondary axis (16) with respect to the second support element (17); the second support element (17) is or can be driven to rotate about a second secondary axis (18) with respect to the carriage (5); the first secondary axis (16) and the second secondary axis (18) run essentially orthogonally to one another;
the first secondary axis (16) the second secondary axis (18) have the smallest normal distance to each other in the center (3) or intersect at the center (3);
the movement device (4) comprises a third support element (19); the second support element (17) is or can be driven to rotate about the second secondary axis (18) with respect to the third support element (19); the third support element (19) is or can be driven to rotate about a third secondary axis (20) with respect to the carriage (5); the second secondary axis (18) and the third secondary axis (20) run essentially orthogonally to one another; and the second secondary axis (18) and the third secondary axis (20) have the smallest normal distance to each other in the center (3) or intersect at the center (3).

7. The device according to any one of claims 1 to 6, **characterized in that** the movement device (4) comprises a lifting device (21) for translational movement and in particular for linear movement of the holding device (2), of the holding device, of the first support element (15), of the second support element (17) and/or optionally of the third support element (19); the movement device of the lifting device (21) runs essentially parallel to the main axis of rotation (7) and/or normal to the travel path (10); and the lifting device (21) comprises one or more linear drives (22), such as, in particular an electrical linear drive or a hydraulic linear drive or a parallel kinematic configuration.

8. The device according to any one of claims 1 to 7, **characterized in that** the holding device (2) is arranged in a compartment (23) and an image playback surface (24) for graphical representation of a simulation environment is provided in the cabin (23);
a simulation of an object to be simulated is provided in the cabin (23) wherein the simulation of the object to be simulated is in particular the simulation of an airplane cockpit, a vehicle cockpit, a helicopter cockpit or a boat cockpit; and operating elements (25) are optionally provided in the area of the holding device (2); the operating elements (25) are connected to a control device; the movement of the device and in particular the simulation can be influenced via the operating elements, so that the person (1) in the cabin (23) can control the simulated object or the movement of the device.

9. The device according to claim 8, **characterized in that** the image playback surface (24) and/or the cabin (23) is/are provided on the second support element (17) or optionally on the third support element (19), so that the holding device (2) has at least one degree of rotational freedom that can be driven with respect to the image playback surface (24) and/or the cabin (23).

10. The device according to any one of claims 8 or 9, **characterized in that** the second support element (17) is designed to be ring-shaped or C-shaped and is rigidly connected to the cabin (23), or the second support element (17) comprises a ring-shaped or C-shaped section, and the cabin (23) is part of the second support element (17).

11. The device according to any one of claims 8 to 10, **characterized in that** the third support element (19) is designed to be ring-shaped and extends around the cabin (23); and recesses (28) to receive rotational drives (29) are provided in the third support element (19), wherein the rotational drives (29) provided in the third support element (19) are configured for rotation of the second support element (17) about the second secondary axis (18) and for rotation of the third support element (19) about the third secondary axis (20).

12. The device according to any one of claims 6 to 11, **characterized in that** the lifting device (21) acts on the third support element (19) and in particular in the area of the third secondary axis (20).

13. The device according to any one of claims 5 to 12, **characterized in that** the first support element (15) is designed as a cantilevered support, which is rotatably connected to the second support element (17) at one end, in particular behind the holding device (2), so that the first support element (15) extends behind and/or beneath the person (1) from the holding device (2) to the second support element (17).

14. The device according to any one of claims 5 to 13, **characterized in that** the first secondary axis (16) corresponds to the rolling axis of the person (1).

15. The device according to any one of claims 1 to 14, **characterized in that** the normal distance (13) from the center (3) to the main axis of rotation (7) in the first outer maximum position (11) is between 4 and 8 meters, between 5 and 7 meters and/or approximately 6 meters;
the normal distance (14) from the center (3) to the main axis of rotation (7) in the second outer maximum position (11) is between 0 and 4 meters, between 0.5 and 4 meters, between 1 and 3 meters and/or approximately 2 meters and/or the normal distance (13) from the center (3) to the main axis of rotation (7) in the first outer maximum position (11) is at least twice as large, in particular between 2 and 4 times larger and/or in particular approximately 3 times larger, 5 times larger, 10 times larger, 20 times larger or in particular 100 times larger than the normal distance (14) from the center (3) to the main axis (7) in the second outer maximum position (11).

## Revendications

1. Dispositif, en particulier simulateur de vol, simulateur de mouvement ou simulateur d'orientation, destiné à déplacer dans l'espace au moins une personne (1) et destiné en particulier à simuler des séquences d'accélération, un dispositif de retenue (2) pour retenir une personne (1) étant prévu au niveau du centre (3),
- dans lequel le dispositif de retenue (2) est fixé à un chariot (5) par l'intermédiaire d'un dispositif de déplacement (4),
- dans lequel le chariot (5) est déplaçable le long d'un support principal (6) s'étendant horizontalement, et en particulier déplaçable linéairement,
- dans lequel le support principal (6) est monté en rotation, peut être entraîné et est éventuellement entraîné par un entraînement principal (35) autour d'un axe de rotation principal (7) s'étendant verticalement,
- dans lequel le support principal (6) présente un premier bras principal (8) et un deuxième bras principal (9),
- dans lequel les deux bras principaux (8, 9) s'étendent dans des directions opposées radialement de l'axe de rotation principal (7) vers l'extérieur,
- dans lequel le centre (3) est déplaçable par un déplacement du chariot (5) le long d'un trajet (10) sur le support principal (6) entre une première position maximale extérieure (11) et une deuxième position maximale extérieure (12),
- dans lequel, dans la première position maximale extérieure (11) du centre (3), le chariot (5) est disposé sur le premier bras principal (8),
- et dans lequel, dans la deuxième position maximale extérieure (12) du centre (3), le chariot (5) est disposé sur le deuxième bras principal (9),
**caractérisé en ce que**
la distance normale (13) entre la première position maximale extérieure (11) du centre (3) et l'axe de rotation principal (7) est supérieure à la distance normale (14) entre la deuxième position maximale extérieure (12) du centre (3) et l'axe de rotation principal (7).

2. Dispositif selon la revendication 1, **caractérisé en ce que** le trajet (10) du centre (3) est limité le long du support principal (6) par la première position maximale extérieure (11) et la deuxième position maximale extérieure (12) .

3. Dispositif selon la revendication 1 ou 2, **caractérisé en ce que** le premier bras principal (8), mesuré perpendiculairement à l'axe de rotation principal (7), est plus long que le deuxième bras principal (9), ou **en ce que** l'axe de rotation principal (7) est disposé de manière asymétrique par rapport au support principal (6) le long de la longueur du support principal (6).

4. Dispositif selon l'une quelconque des revendications 1 à 3, **caractérisé en ce que** le support principal (6) présente le long du trajet (10) un profil en cuvette ou en forme de U, et **en ce que** le chariot (5) est guidé sur ou dans le support principal (6) et est saisi au moins en partie par le support principal (6).

5. Dispositif selon l'une quelconque des revendications 1 à 4, **caractérisé en ce que** le dispositif de déplacement (4) comprend un premier élément porteur (15) disposé en étant ou en pouvant être relié de manière rigide au dispositif de retenue (2), **en ce que** le premier élément porteur (15) peut être ou est entraîné en rotation autour d'un premier axe secondaire (16) par rapport au chariot (5), **en ce que** le premier axe secondaire (16) passe par le centre,
**en ce que** le dispositif de déplacement (4) comprend un deuxième élément porteur (17), **en ce que** le premier élément porteur (15) peut être ou est entraîné en rotation autour du premier axe secondaire (16) par rapport au deuxième élément porteur (17), et **en ce que** le deuxième élément porteur (17) peut être ou est entraîné en rotation autour d'un deuxième axe secondaire (18) par rapport au chariot (5), **en ce que** le premier axe secondaire (16) et le deuxième axe secondaire (18) s'étendent de manière substantiellement orthogonale l'un à l'autre, et **en ce que** le premier axe secondaire (16) et le deuxième axe secondaire (18) présentent au centre (3) la plus petite distance normale l'un par rapport à l'autre ou se croisent au centre (3).

6. Dispositif selon l'une quelconque des revendications 1 à 4, **caractérisé en ce que** le dispositif de déplacement (4) comprend un premier élément porteur (15) qui est disposé en étant ou en pouvant être relié de manière rigide au dispositif de retenue (2), **en ce que** le premier élément porteur (15) peut être ou est entraîné en rotation autour d'un premier axe secondaire (16) par rapport au chariot (5), **en ce que** le premier axe secondaire (16) passe par le centre (3),
**en ce que** le dispositif de déplacement (4) comprend un deuxième élément porteur (17), **en ce que** le premier élément porteur (15) peut être ou est entraîné en rotation autour du premier axe secondaire (16) par rapport au deuxième élément porteur (17), **en ce que** le deuxième élément porteur (17) peut être ou est entraîné en rotation autour d'un deuxième axe secondaire (18) par rapport au chariot (5), **en ce que** le premier axe secondaire (16) et le deuxième axe secondaire (18) s'étendent de manière substantiellement orthogonale l'un à l'autre,
**en ce que** le premier axe secondaire (16) et le deuxième axe secondaire (18) présentent au centre (3) la plus petite distance normale l'un par rapport à l'autre ou se croisent au centre (3),
**en ce que** le dispositif de déplacement (4) comprend un troisième élément porteur (19), **en ce que** le deuxième élément porteur (17) peut être ou est entraîné en rotation autour du deuxième axe secondaire (18) par rapport au troisième élément porteur (19), **en ce que** le troisième élément porteur (19) peut être ou est entraîné autour d'un troisième axe secondaire (20) par rapport au chariot (5), **en ce que** le deuxième axe secondaire (18) et le troisième axe secondaire (20) s'étendent de manière substantiellement orthogonale l'un par rapport à l'autre, et **en ce que** le deuxième axe secondaire (18) et le troisième axe secondaire (20) présentent au centre (3) la plus petite distance normale l'un par rapport à l'autre ou se croisent au centre (3).

7. Dispositif selon l'une quelconque des revendications 1 à 6, **caractérisé en ce que** le dispositif de déplacement (4) comprend un dispositif de levage (21) pour un déplacement en translation et en particulier linéaire du dispositif de retenue (2), de retenue, du premier élément porteur (15), du deuxième élément porteur (17) et/ou le cas échéant du troisième élément porteur (19), **en ce que** la direction de déplacement du dispositif de levage (21) s'étend de manière substantiellement parallèle à l'axe de rotation principal (7) et/ou perpendiculaire au trajet (10) et **en ce que** le dispositif de levage (21) comprend un ou plusieurs entraînements linéaires (22) en particulier tel qu'un entraînement linéaire électrique ou hydraulique ou un agencement cinématique parallèle.

8. Dispositif selon l'une quelconque des revendications 1 à 7, **caractérisé en ce que** le dispositif de retenue (2) est disposé dans une cabine (23), et **en ce que** dans la cabine (23) est prévue une surface de reproduction d'images (24) pour la représentation par images d'un environnement de simulation,
**en ce que** dans la cabine (23) est prévue une reproduction d'un objet à simuler, dans lequel la reproduction de l'objet à simuler est en particulier la reproduction d'un poste de pilotage d'un avion, d'un poste de pilotage d'un véhicule, d'un poste de pilotage d'un hélicoptère ou d'un poste de pilotage d'un bateau, et **en ce qu'**au niveau du dispositif de retenue (2), des éléments de commande (25) sont prévus le cas échéant, **en ce que** les éléments de commande (25) sont reliés à un dispositif de commande, **en ce que** les éléments de commande permettent d'affecter le déplacement du dispositif et en particulier la simulation de sorte que la personne (1) se trouvant dans la cabine (23) peut commander l'objet simulé ou le déplacement du dispositif.

9. Dispositif selon la revendication 8, **caractérisé en ce que** la surface de reproduction d'images (24) et/ou la cabine (23) sont prévues sur le deuxième élément porteur (17) ou le cas échéant sur le troisième élément porteur (19) de sorte que le dispositif de retenue (2) présente au moins un degré de liberté de rotation pouvant être entraîné par rapport à la surface de reproduction d'images (24) et/ou à la cabine (23) .

10. Dispositif selon l'une quelconque des revendications 8 ou 9, **caractérisé en ce que** le deuxième élément porteur (17) est réalisé en forme d'anneau ou en forme de C et est relié à la cabine (23) de manière rigide, ou **en ce que** le deuxième élément porteur (17) comprend une partie annulaire ou en forme de C et la cabine (23) fait partie du deuxième élément porteur (17) .

11. Dispositif selon l'une quelconque des revendications 8 bis 10, **caractérisé en ce que** le troisième élément porteur (19) est réalisé en forme d'anneau et s'étend tout autour de la cabine (23), et **en ce que** dans le troisième élément porteur (19), des évidements (28) sont prévus pour recevoir des entraînements rotatifs (29), dans lequel les entraînements rotatifs (29) prévus dans le troisième élément porteur (19) sont agencés pour faire tourner le deuxième élément porteur (17) autour du deuxième axe secondaire (18) et pour faire tourner le troisième élément porteur (19) autour du troisième axe secondaire (20).

12. Dispositif selon l'une quelconque des revendications 6 à 11, **caractérisé en ce que** le dispositif de levage (21) attaque au niveau du troisième élément porteur (19) et en particulier au niveau du troisième axe secondaire (20).

13. Dispositif selon l'une quelconque des revendications 5 à 12, **caractérisé en ce que** le premier élément porteur (15) est réalisé sous forme de poutre en console, reliée en rotation d'un côté, en particulier derrière le dispositif de retenue (2), au deuxième élément porteur (17) de sorte que le premier élément porteur (15) s'étend derrière et/ou sous la personne (1) du dispositif de retenue (2) au deuxième élément porteur (17).

14. Dispositif selon l'une quelconque des revendications 5 à 13, **caractérisé en ce que** le premier axe secondaire (16) correspond à l'axe de roulis de la personne (1).

15. Dispositif selon l'une quelconque des revendications 1 à 14, **caractérisé en ce que** la distance normale (13) du centre (3) par rapport à l'axe de rotation principal (7) dans la première position maximale extérieure (11) mesure entre 4 et 8 m, entre 5 et 7 m et/ou environ 6 m,
**en ce que** la distance normale (14) du centre (3) par rapport à l'axe de rotation principal (7) dans la deuxième position maximale extérieure (11) mesure entre 0 et 4 m, entre 0,5 et 4 m, entre 1 et 3 m et/ou environ 2 m,
et/ou **en ce que** la distance normale (13) du centre (3) par rapport à l'axe de rotation principal (7) dans la première position maximale extérieure (11) est supérieure au moins 2 fois, en particulier entre 2 et 4 fois et/ou en particulier environ 3 fois, 5 fois, 10 fois, 20 fois ou en particulier 100 fois à la distance normale (14) du centre (3) par rapport à l'axe de rotation principal (7) dans la deuxième position maximale extérieure (11).
